# EUROPEAN PATENT APPLICATION

(11) **EP 4 455 635 A2**
(43) Date of publication of application: **30.10.2024**
(21) Application number: 24172036.6
(22) Date of filing: 24.04.2024
(51) Int. Cl.: G01N 15/14

(54) **SAMPLE ANALYSIS METHOD FOR DETECTING BLAST CELLS, SAMPLE ANALYZER, REAGENT AND USE THEREOF**

(30) Priority: 24.04.2023 CN 202310469745
(71) Applicant: Shenzhen Mindray Bio-Medical Electronics Co., Ltd., Shenzhen, Guangdong 518057 (CN)
(72) Inventor: LIU, Zongjun, Shenzhen, 518057 (CN); CHEN, Gengwen, Shenzhen, 518057 (CN); GAO, Fei, Shenzhen, 518057 (CN); RUAN, Chuliang, Shenzhen, 518057 (CN)
(74) Representative: KIPA AB

(57) **Abstract**

The application discloses a sample analysis method for detecting blast cells, a sample analyzer, a reagent and a use thereof. The sample analysis method comprises the following operations: obtaining a specimen to be tested; preparing a first sample comprising at least a portion of the specimen to be tested and a first reagent, the first reagent comprising a hemolytic agent containing at least one nonionic surfactant comprising a dehydrated sorbitan fatty acid ester and a staining agent containing a fluorescent dye; causing particles in the first sample to pass one by one through a detection area of an optical detection device to obtain optical signals of the particles; obtaining first characteristic region information and ghost region information based on the optical signal; obtaining the blast cell information based on the first characteristic region information and the ghost region information. This method can accurately detect the existence of blast cells in blood samples.

## Description

### TECHNICAL FIELD

The application related to the field of *in vitro* diagnosis, in particular to a sample analysis method for detecting blast cells, a sample analyzer, a reagent and a use thereof.

### BACKGROUND

The development of blood cells is to differentiate from immature blood cells into mature blood cells, and finally transfer them to peripheral blood. Immature white blood cells do not appear in peripheral blood of healthy people. When suffering from hematological diseases such as leukemia, metastasis of bone marrow cancer, severe infection and other diseases, immature white blood cells will appear in blood. Therefore, the determination of immature white blood cells in human peripheral blood is of great significance for disease diagnosis.

The detection methods for immature blood cells such as lymphoblasts and myeloblasts mainly rely on specific antibodies. This method has a good accuracy, but the detection cost is high, and this method has the problems of long time-consuming, complicated operation and high cost when applied to the screening of samples containing blast cells in peripheral blood such as leukemia. At present, a rapid detection method for analyzing immature white blood cells based on a blood cell analyzer has been developed, in which a fluorescent dye is mainly used to differentially staining intracellular nucleic acids. However, due to the little difference in nucleic acid contents between normal cells and immature white blood cells, the methods for detecting nucleic acid have the problems of insufficient accuracy and relatively high false positive and false negative.

Therefore, it is necessary to further improve the accuracy of detecting blast cells based on blood cell analyzer.

### SUMMARY

The purpose of the present disclosure is to provide a sample analysis method for detecting blast cells, a sample analyzer, a reagent for the detection and a use thereof. The analysis of blast cells in blood samples with the reagent by utilizing the cell membrane structure difference between blast cells and mature leukocytes, increase the detection signal difference between the blast cells and mature leukocytes, and thereby significantly improve the detection accuracy.

To this end, the first aspect of the present disclosure provides a sample analysis method. The method comprises the following operations. A specimen to be tested of a subject is obtained. A first sample is prepared, and the first sample contains at least a part of the specimen to be tested and a first reagent, in which the first reagent comprises a hemolytic agent containing at least one nonionic surfactant comprising a dehydrated sorbitan fatty acid esterand a staining agent containing a fluorescent dye. The particles in the first sample is caused to pass one-by-one through a detection area of an optical detection device and the particles in the first sample are irradiated with a light source of the optical detection device to obtain optical signals of the particles. First characteristic region information and ghost region information are obtained based on the optical signals, in which the first characteristic region information comprises blast cell information and at least part of the ghost region information. The blast cell information is obtained based on the first characteristic region information and the ghost region information.

In some embodiments, the optical signals comprise a side scattered light intensity signal, a forward scattered light intensity signal, and a first fluorescence light intensity signal from the staining agent containing the fluorescent dye. Obtaining the first characteristic region information and the ghost region information based on the optical signals comprises: obtaining the first characteristic region information based on the side scattered light intensity signal and the forward scattered light intensity signal, and obtaining the ghost region information based on at least the first fluorescence light intensity signal.

The second aspect of the present disclosure provides another sample analysis method. The method comprises the following operations. A specimen to be tested of a subject is obtained. A second sample is prepared, in which the second sample comprises at least a portion of the specimen to be tested and a second reagent, and the second reagent comprises a hemolytic agent, a staining agent containing a fluorescent dye and an antibody treatment agent containing a fluorescent labeled CD45. The particles in the second sample is caused to pass one-by-one through a detection area of an optical detection device and the particles in the second sample are irradiated with a light source of the optical detection device to obtain optical signals of the particles, in which the optical signals comprise a side scattered light intensity signal, a forward scattered light intensity signal, a first fluorescence light intensity signal from the staining agent containing the fluorescent dye, and a second fluorescence light intensity signal from the antibody treatment agent containing the fluorescent labeled CD45. First characteristic region information is obtained based on the side scattered light intensity signal and the second fluorescence light intensity signal, a ghost region information is obtained based on at least the first fluorescence light intensity signal, the first characteristic region information comprises blast cell information and the at least part of ghost region information. The blast cell information is obtained based on the first characteristic region information and the ghost region information.

In some embodiments, the fluorescent labeled CD45 in the second reagent has a concentration of 25µg/mL to 1000µg/mL, preferably 50µg/mL to 250µg/mL.

In some embodiments, the hemolytic agent comprises at least one selected from a group consisting of cationic surfactants, nonionic surfactants, alkyl glycosides, triterpenoid saponins, steroidal saponins, and diethylene glycol. Preferably, the cationic surfactants are selected from quaternary ammonium salts; the nonionic surfactants are selected from polyoxyethylenes and dehydrated sorbitan fatty acid esters. More preferably, the hemolytic agent comprises at least one nonionic surfactant comprising a dehydrated sorbitan fatty acid ester.

In some embodiments of the present disclosure, another sample analysis method is provided. The method comprises the following operations. A specimen to be tested of a subject is obtained. A second sample is prepared, in which the second sample comprises at least a portion of the specimen to be tested and a second reagent, and the second reagent comprises a hemolytic agent, a staining agent containing a fluorescent dye and an antibody treatment agent containing a fluorescent labeled antibody. The particles in the second sample is caused to pass one-by-one through a detection area of an optical detection device and the particles in the second sample are irradiated with a light source of the optical detection device to obtain optical signals of the particles, in which the optical signals comprise a side scattered light intensity signal, a forward scattered light intensity signal, a first fluorescence light intensity signal from the staining agent containing the fluorescent dye, and a second fluorescence light intensity signal from the antibody treatment agent containing the fluorescent labeled antibody. First characteristic region information is obtained based on the side scattered light intensity signal and the second fluorescence light intensity signal, a ghost region information is obtained based on at least the first fluorescence light intensity signal, the first characteristic region information comprises blast cell information and at least part of the ghost region information. The blast cell information is obtained based on the first characteristic region information and the ghost region information.

The third aspect of the present disclosure provides yet another sample analysis method. The method comprises the following operations. A specimen to be tested is obtained from a subject. A third sample is prepared, and the third sample comprises at least a portion of the specimen to be tested and a third reagent, wherein the third reagent comprises at least a hemolytic agent capable of treating respective cell membranes of mature white blood cells and those of blast cells differently, and a staining agent containing a fluorescent dye. Particles in the third sample is caused to pass one-by-one through a detection area of an optical detection device, the particles in the third sample are irradiated with a light source of the optical detection device to obtain optical signals of the particles, wherein the optical signals comprise a side scattered light intensity signal, a forward scattered light intensity signal, a first fluorescence light intensity signal from the staining agent containing the fluorescent dye. A first characteristic region information is obtained based on the side scattered light intensity signal and the forward scattered light intensity signal, a ghost region information is obtained based on at least the first fluorescence light intensity signal, wherein the first characteristic region information comprises blast cell information and at least part of ghost region information. The blast cell information is obtained based on the first characteristic region information and the at least part of ghost region information.

In some embodiments of the above aspects of the methods, obtaining ghost region information based on at least the first fluorescence light intensity signal comprises: obtaining the ghost region information based on the first fluorescence light intensity signal and any one of the side scattered intensity signal and the forward scatted intensity signal.

In some embodiments of the above aspects of the sample analysis methods, obtaining the blast cell information based on the first characteristic region information and the ghost region information comprises: subtracting the at least part of the ghost region information from the first characteristic region information to obtain the blast cell information.

In some embodiments of the above aspects of the methods, the hemolytic agent comprises at least one nonionic surfactant comprising a dehydrated sorbitan fatty acid ester.

The fluorescent dye has a concentration of 1mg/L to 500mg/L, preferably 10mg/L to 50mg/L.

In the above aspects of the sample analysis methods, the blast cell information includes a count and/or an alarm about blast cells.

The fourth aspect of the present disclosure provides another sample analysis method. The method comprises the following operations. A specimen to be tested is obtained from a subject. A fourth sample is prepared, and the fourth sample comprises at least a portion of the specimen to be tested and a fourth reagent, wherein the fourth reagent comprises a hemolytic agent containing at least one nonionic surfactant comprising a dehydrated sorbitan fatty acid ester. Particles in the fourth sample is caused to pass one-by-one through a detection area of an optical detection device, the particles in the fourth sample are irradiated with a light source of the optical detection device to obtain optical signals of the particles, wherein the optical signals comprise a side scattered light intensity signal and a forward scattered light intensity signal. A first characteristic region information is obtained based on the side scattered light intensity signal and the forward scattered light intensity signal, wherein the first characteristic region information comprises blast cell information. The blast cell information is obtained based on the first characteristic region information.

In the some embodiments, the blast cell information includes an alarm about blast cells.

In some embodiments of the above sample analysis methods, the dehydrated sorbitan fatty acid ester is selected from a group consisting of Tween and Span, preferably, the dehydrated sorbitan fatty acid ester is selected from a group consisting of Span 40 ~ Span 80 and Tween 20 ~ Tween 100.

The at least one nonionic surfactant comprising a dehydrated sorbitan fatty acid ester has a concentration of 0.2g/L to 2g/L, preferably 0.3g/L to 1.5 g/L.

The specimen to be tested includes peripheral blood.

The fifth aspect of the present disclosure provides another sample analysis method. The method comprises the following operations. The operation instruction is received and detection of blast cell is carried out on the specimen, in which the blast cell detection on the specimen comprises the operations of any of the above sample analysis methods.

The sixth aspect of the present disclosure provides a sample analyzer. The sample analyzer comprises a specimen aspiration device, a sample preparation device, a light source, a flow chamber, optical detectors, a processor, and a non-transitory computer-readable storage medium programmed with computer program instructions. The specimen aspiration device is configured to aspirate at least a portion of the specimen to be tested and transport it to the sample preparation device. The sample preparation device comprises a reagent supply part and a reaction cell, in which the reagent supply part is configured to provide a first reagent to the reaction cell. The reaction cell is configured to mix the first reagent with the at least a portion of the specimen to be tested to obtain a first sample and transport the first sample to the flow chamber, in which the first reagent comprises a hemolytic agent containing at least one nonionic surfactant comprising a dehydrated sorbitan fatty acid ester and a staining agent containing fluorescent dye. The light source is configured to align a light beam with a detection hole of the flow chamber connected with the reaction cell. The flow chamber is configured to allow particles in the sample to pass through one by one. The optical detectors are mounted around the flow chamber for detecting optical signals of the particles passing through the detection hole of the flow chamber. The processor is operably connected to the optical detectors. When the computer program instructions programed in the non-transitory computer-readable storage medium are executed by the processor, the processor performs the following operations: first characteristic region information and ghost region information is obtained based on the optical signals, which comprises blast cell information and at least part of ghost region information, and the blast cell information is obtained based on the first characteristic region information and the ghost region information.

In some embodiments, the optical signals comprises a side scattered light intensity signal, a forward scattered light intensity signal, and a first fluorescence light intensity signal from the staining agent containing the fluorescent dye; wherein obtaining the first characteristic region information and the ghost region information based on the optical signals comprises: obtaining the first characteristic region information based on the side scattered light intensity signal and the forward scattered light intensity signal, and obtaining the ghost region information based on at least the first fluorescence light intensity signal.

In some embodiments, obtaining the ghost region information base on at least the first fluorescence light intensity signal comprises: obtaining the ghost region information based on the first fluorescence light intensity signal and any one of the side scattered light intensity signal and the forward scattered light intensity signal.

In some embodiments, the reagent supply part comprises a plurality of reagent storage containers, and the hemolytic agent and the staining agent are respectively stored in different storage containers; or the hemolytic agent and the staining agent are stored in a mixed form in one storage container.

In some embodiments, the blast cell information comprises a count and/or an alarm about blast cells.

In some embodiments, the sample analyzer further comprises a user interface configured to display detection results and/or input instructions to the sample analyzer.

The seventh aspect of the present disclosure provides another sample analyzer. The sample analyzer comprises a specimen aspiration device, a sample preparation device, a light source, a flow chamber, optical detectors, a processor, and a non-transitory computer-readable storage medium programmed with computer program instructions. The specimen aspiration device is configured to aspirate at least a portion of the specimen to be tested and transport it to the sample preparation device. The sample preparation device comprises a reagent supply part and a reaction cell, in which the reagent supply part is configured to provide a second reagent to the reaction cell, the reaction cell is configured to mix the second reagent with the at least a portion of the specimen to be tested to obtain a second sample and transport the second sample to the flow chamber, in which the second reagent comprises a hemolytic agent, a staining agent containing a fluorescent dye and an antibody treatment agent containing a fluorescent labeled CD45. The light source is configured to align a light beam with a detection hole of the flow chamber connected with the reaction cell. The flow chamber is configured to allow particles in the sample to pass through one by one. The optical detectors are mounted around the flow chamber for detecting optical signals of particles passing through the detection hole of the flow chamber, in which the optical signals comprises a side scattered light intensity signal, a forward scattered light intensity signal, a first fluorescence light intensity signal from the staining agent containing the fluorescent dye, and a second fluorescence light intensity signal from the antibody treatment agent containing the fluorescent labeled CD45. The processor is operably connected to the optical detectors. When the computer program instructions programed in the non-transitory computer-readable storage medium is executed by the processor, the processor performs the following operations. First characteristic region information is obtained based on the side scattered light intensity signal and the second fluorescence light intensity signal, ghost region information is obtained based on at least the first fluorescence light intensity signal, in which the first characteristic region information comprises blast cell information and at least part of the ghost region information; and the blast cell information is obtained based on the first characteristic region information and the ghost region information.

In some embodiments, obtaining the ghost region information base on at least the first fluorescence light intensity signal comprises: obtaining the ghost region information based on the first fluorescence light intensity signal and any one of the side scattered light intensity signal and the forward scattered light intensity signal.

In some embodiments, obtaining the blast cell information based on the first characteristic region information and the ghost region information comprises: subtracting the at least part of the ghost region information from the first characteristic region information to obtain the blast cell information.

In some embodiments, the reagent supply part comprises a plurality of reagent storage containers, and the hemolytic agent, the staining agent and the antibody treatment agent are respectively stored in different storage containers; or any two or three of the hemolytic agent, the staining agent and the antibody treatment agent are stored in a mixed form in one storage container.

In some embodiments, the blast cell information comprises a count and/or an alarm about blast cells.

In some embodiments, the sample analyzer further comprises a user interface configured to display detection results and/or input instructions to the sample analyzer.

The eighth aspect of the present disclosure, according to some embodiments, further provides a sample analyzer. The sample analyzer comprises a specimen aspiration device, a sample preparation device, a light source, a flow chamber, optical detectors, a processor, and a non-transitory computer-readable storage medium programmed with computer program instructions. The specimen aspiration device is configured to aspirate at least a portion of the specimen to be tested and transport it to the sample preparation device. The sample preparation device comprises a reagent supply part and a reaction cell, in which the reagent supply part is configured to provide a second reagent to the reaction cell. The reaction cell is configured to mix the second reagent with the at least a portion of the specimen to be tested to obtain a second sample and transport the second sample to the flow chamber, in which the second reagent comprises a hemolytic agent, a staining agent containing a fluorescent dye and an antibody treatment agent containing a fluorescent labeled antibody. The light source is configured to align a light beam with a detection hole of the flow chamber connected with the reaction cell. The flow chamber is configured to allow particles in the sample to pass through one by one. The optical detectors are mounted around the flow chamber for detecting optical signals of particles passing through the detection hole of the flow chamber, in which the optical signals include a side scattered light intensity signal, a forward scattered light intensity signal, a first fluorescence light intensity signal from the staining agent containing the fluorescent dye, and a second fluorescence light intensity signal from the antibody treatment agent containing the fluorescent labeled antibody. The processor is operably connected to the optical detectors. When the computer program instructions programed in the non-transitory computer-readable storage medium are executed by the processor, the processor performs the following operations. First characteristic region information is obtained based on the side scattered light intensity signal and the second fluorescence light intensity signal, ghost region information is obtained based on at least the first fluorescence light intensity signal, in which the first characteristic region information comprises blast cell information and at least part of the ghost region information; and the blast cell information is obtained based on the first characteristic region information and the ghost region information.

The ninth aspect of the present disclosure provides another sample analyzer. The sample analyzer comprises a specimen aspiration device, a sample preparation device, a light source, a flow chamber, optical detectors, a processor, and a non-transitory computer-readable storage medium programmed with computer program instructions, wherein, the specimen aspiration device is configured to aspirate at least a portion of the specimen to be tested and transport it to the sample preparation device; the sample preparation device comprises a reagent supply part and a reaction cell, wherein the reagent supply part is configured to provide a third reagent to the reaction cell, the reaction cell is configured to mix the third reagent with the at least a portion of the specimen to be tested to obtain a third sample and transport the third sample to the flow chamber, wherein the third reagent comprises at least a hemolytic agent capable of treating respective cell membranes of mature white blood cells and those of blast cells in the third sample differently and a staining agent containing fluorescent dye; the light source is configured to align a light beam with a detection hole of the flow chamber connected with the reaction cell; the flow chamber is configured to allow particles in the third sample to pass one-by-one through the flow chamber; the optical detectors are mounted around the flow chamber for detecting optical signals of the particles passing through the detection hole of the flow chamber, wherein the optical signals comprises a side scattered light intensity signal, a forward scattered light intensity signal, and a first fluorescence light intensity signal from the staining agent containing the fluorescent dye; the processor is operably connected to the optical detectors, when the computer program instructions programed in the non-transitory computer-readable storage medium is executed by the processor, the processor performs the following operations. A first characteristic region information is obtained based on the side scattered light intensity signal and the forward scattered light intensity signal, a ghost region information is obtained based on at least the first fluorescence light intensity signal, wherein the first characteristic region information comprises blast cell information and at least part of the ghost region information. The blast cell information is obtained based on the first characteristic region information and the at least part of ghost region information.

The tenth aspect of the present disclosure provides yet another sample analyzer. The sample analyzer comprises a specimen aspiration device, a sample preparation device, a light source, a flow chamber, optical detectors, a processor, and a non-transitory computer-readable storage medium programmed with computer program instructions, wherein, the specimen aspiration device is configured to aspirate at least a portion of the specimen to be tested and transport it to the sample preparation device; the sample preparation device comprises a reagent supply part and a reaction cell, wherein the reagent supply part is configured to provide a fourth reagent to the reaction cell, the reaction cell is configured to mix the fourth reagent with the at least a portion of the specimen to be tested to obtain a fourth sample and transport the fourth sample to the flow chamber, wherein the fourth reagent comprises a hemolytic agent containing at least one nonionic surfactant comprising a dehydrated sorbitan fatty acid ester; the light source is configured to align a light beam with a detection hole of the flow chamber connected with the reaction cell; the flow chamber is configured to allow particles in the fourth sample to pass one-by-one through the flow chamber; the optical detectors are mounted around the flow chamber for detecting optical signals of the particles passing through the detection hole of the flow chamber, wherein the optical signals comprises a side scattered light intensity signal and a forward scattered light intensity signal; the processor is operably connected to the optical detectors, when the computer program instructions programed in the non-transitory computer-readable storage medium are executed by the processor, the processor performs the following operations: a first characteristic region information is obtained based on the side scattered light intensity signal and the forward scattered light intensity signal, wherein the first characteristic region information comprises blast cell information. A reminder about the blast cell information is outputted based on the first characteristic region information.

The eleventh aspect of the present disclosure provides a reagent for detecting blast cells. The reagent comprises a hemolytic agent containing at least one nonionic surfactant comprising a dehydrated sorbitan fatty acid ester, and a staining agent containing a fluorescent dye.

In some embodiments, the at least one nonionic surfactant comprising a dehydrated sorbitan fatty acid ester has a concentration of 0.2g/L to 2g/L, preferably 0.3g/L to 1.5 g/L.

In some embodiments, the at least one nonionic surfactant dehydrated sorbitan fatty acid ester is selected from the group consisting of Tween and Span; preferably, Span is selected from Span 40 ~ Span 80 and Tween is selected from Tween 20 ~ Tween 100.

In some embodiments, the hemolytic agent further comprises: 0.1g/L to 10g/L, preferably 2g/L to 5g/L of a cosolvent; 0.1 g/L to 10g/L of a buffer agent; and 0.05 g/L to 2g/L, preferably 0.2g/L to 1g/L of an anticoagulant.

In some embodiments, the fluorescent dye is selected from a group consisting of compounds represented by Formula I and Formula II: 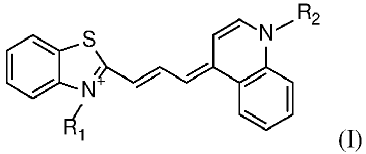
wherein R1 and R2 are each independently selected from C2-C8 alkyl; 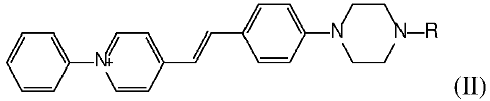
wherein R is selected from C2-C8 alkyl or H.

In some embodiments, the fluorescent dye in the reagent has a concentration of 1mg/L to 500mg/L, preferably 10mg/L to 50mg/L.

In some embodiments, the reagent further comprises an antibody treatment agent comprising a fluorescent labeled CD45.

In some embodiments, the fluorescent labeled CD45 in the reagent has a concentration of 25µg/mL to 1000µg/mL, preferably 50µg/mL to 250µg/mL.

In some embodiments, the hemolytic agent, the staining agent and the antibody treatment agent are separately packaged reagents; or any two or three of the hemolytic agent, the staining agent and the antibody treatment agent form one reagent packaged in a mixed form.

The twelfth aspect of the present disclosure provides the use of the above reagent for detecting blast cells in a sample using a sample analyzer.

In the sample analysis method of some embodiments of the present disclosure, the hemolytic agent capable to treating respective cell membranes of blast cells and those of white blood cells differently (such as including a dehydrated sorbitan fatty acid ester-based nonionic surfactant as a hemolytic agent) and a staining agent containing a fluorescent dye is used to treat the specimen. The hemolytic agent can lyse red blood cells on the one hand, and treat respective the cell membranes of blast cells and those of white blood cells differently on the other hand. Therefore, the dye can preferentially enter mature white blood cells to staining nucleic acids, so as to enlarge the optical characteristics, especially the difference of scattered light signals, between blast cells and white blood cells which combine the fluorescent signals from the nucleic acid dye to realize the distinction between blast cells and white blood cells.

In the sample analysis method of other embodiments of the present disclosure, the specimen is treated with a reagent including a dehydrated sorbitan fatty acid ester-based nonionic surfactant as a hemolytic agent. The surfactant can lyse red blood cells on the one hand, and treat respective the cell membranes of blast cells and those of white blood cells differently on the other hand, so as to enlarge the optical characteristics, especially the difference of scattered light signals between blast cells and white blood cells, thereby distinguishing the blast cells from white blood cells, and further alarming the specimen containing blast cells.

In the sample analysis method of other embodiments of the present disclosure, the specimen is treated with a reagent comprising a hemolytic agent, an antibody treatment agent containing a fluorescent labeled CD45, and a staining agent containing a fluorescent dye. In the case of hemolytic, a fluorescent signal from the fluorescent labeled CD45 is obtained by specific binding of the CD45 to a surface antigen of the blast cell. The difference in optical characteristics of the blast cells and the white blood cells can be enlarged by combining the fluorescent signal with a scattered light signal, thereby accurately distinguishing the blast cells from the white blood cells.

In addition, the sample analysis method provided by the present disclosure is more sensitive and accurate in identifying blast cells originating from acute lymphoblastic leukemia.

### BRIEF DESCRIPTION OF THE DRAWINGS

In the drawings, identical reference numerals refer to the same or similar part.
FIG. 1 shows principle schematic diagrams of a sample analysis method according to an embodiment of the present disclosure;
FIG. 2 is a flow diagram of the sample analysis method according to the embodiment shown in FIG. 1;
FIG. 3 shows principle schematic diagrams of a sample analysis method according to another embodiment of the present disclosure;
FIG. 4 is a flow diagram of the sample analysis method according to the embodiment shown in FIG. 3;
FIG. 5 is a perspective schematic view of a sample analyzer according to an embodiment of the present disclosure;
FIG. 6 is a structural block diagram of an optical detection device in a sample analyzer according to an embodiment of the present disclosure;
FIG. 7 shows scatter plots of a blood specimen from a normal subject detected by the reagent of Example 1 according to the sample analysis method of an embodiment of the present disclosure;
FIG. 8 shows scatter plots of blood specimens from a healthy subject and a patient detected by the reagent of Example 2 according to the sample analysis method of an embodiment of the present disclosure;
FIG. 9 showns scatter plots of a blood specimen from a patient detected by the reagent of Example 3 according to a sample analysis method of an embodiment of the present disclosure;
FIG. 10 shows scatter plots of a blood specimen from a patient detected by the reagent of Example 4 according to the sample analysis method of an embodiment of the present disclosure;
FIG. 11 shows scatter plots of blood specimens from a healthy subject detected by the reagent of Example 5 according to the sample analysis method of an embodiment of the present disclosure;
FIG. 12 shows scatter plots of blood specimens from a healthy subject and a patient detected by the reagent of Example 6 according to the sample analysis method of an embodiment of the present disclosure;
FIG. 13 shows scatter plots of a blood specimens from a healthy subject and a patient detected by the reagent of Example 7 according to the sample analysis method of an embodiment of the present disclosure;
FIG. 14 shows scatter plots of blood specimens from a healthy subject and a patient detected by the reagent of Example 8 according to the sample analysis method of an embodiment of the present disclosure;
FIG. 15 shows scatter plots of antibody fluorescence light intensity (WAS) versus side scattered light intensity (SSC) of the test results of specimens with the blast cell content of 0% (normal specimen), 1.2%, 3.3% and 62%, respectively, in Example 9;
FIG. 16 is a linear fitting graph of the blast cell count obtained by the same detection method as that of Example 8 in Example 9 with respect to the blast cell count obtained by the microscopic examination method;
FIG. 17 shows scatter plots of a blood specimen from a patient detected by the reagent of Example 10 according to the sample analysis method of an embodiment of the present disclosure;
FIG. 18 shows comparison diagrams of false early warning results obtained by adopting the method of an embodiment of the present disclosure and the conventional method to detect clinical specimens and counting the detection results of lymphoblastic leukemia patients and myeloid leukemia patients respectively;
FIG. 19 shows scatter plots of blood specimens of a healthy subject and a patient detected by the reagent of Example 12 according to the sample analysis method of an embodiment of the present disclosure.
FIG. 20 shows scatter plots of blood specimens of a healthy subject and a detected by the reagent of Example 13 according to the sample analysis method of an embodiment of the present disclosure.

### DETAILED DESCRIPTION

A clear and complete description of the technical solution of the disclosure will be given below in connection with specific embodiments of the disclosure and the accompanying drawings, and it will be apparent that the described embodiments are only part of the embodiment of the disclosure, not all of the embodiments. Based on the embodiments in the disclosure, any other embodiments obtained by those of ordinary skill in the art without making creative effort falls within the scope of protection of the disclosure.

Throughout the specification, terminology used herein shall be understood in the meanings commonly used in the art unless otherwise specifically stated. Accordingly, unless otherwise defined all technical and scientific terms used herein have the same meaning as generally understood by those skilled in the art to which the disclosure pertains. In case of any contradiction, this manual takes precedence.

The descriptions referred to herein as "first" and "second" are used for the purposes of describing only and cannot be understood as indicating or implying the relative importance or implying the number of technical features indicated. Thus, the features defined as "first", "second" may explicitly or implicitly include at least one of the features.

In addition, the technical solutions among the various embodiments may be combined with each other, but must be on the basis that those of ordinary skill in the art can realize it. When the combination of technical solutions conflicts or cannot be realized, it should be considered that the combination of technical solutions does not exist and is not within the scope of protection claimed by the present disclosure.

The term "blast cells" mentioned herein refer to the cells at which various blood cells begin to develop. Blast cells do not appear in the blood of healthy people, but they do appear in the blood of patients with some diseases, especially blood diseases.

In related technologies, the detection of blood samples based on an automatic blood cell analyzer can only give an alarm about the blast cells possibly existed in the samples, and there is a high proportion of false alarms including both false negative and false positive alarms. In such detection method, the fluorescence signal produced by the combination of nucleic acid fluorescent dye and intracellular nucleic acid substance, combined with a scattered light signal, is usually used to classify and count white blood cells. When the sample contains blast cells, the detection data will be abnormal, which can give an alarm about the existence of blast cells. However, the intracellular nucleic acid content of blast cells is similar to that of white blood cells. Such method cannot distinguish blast cells from white blood cells well, thus leading to insufficient detection accuracy of blast cells.

In order to further improve detection accuracy of blast cells in blood samples detected by a sample analyzer, the present disclosure provides a sample analysis method. Exemplary embodiments of the sample analysis method are described in detail below.

The sample analysis method according to the first embodiment is based on the discovery of the inventors. The inventors have found that when specimens are treated with different hemolytic agents, due to certain differences in cell membrane structures of blast cells and white blood cells, when samples are treated with dehydrated sorbitan fatty acid ester-based nonionic surfactants such as Tween and/or Span as hemolytic agents, compared with other commonly used hemolytic agents such as quaternary ammonium salts, treatment of cell membranes of blast cells and white blood cells differently can be realized. The treatment of cell membranes by this hemolytic agent further leads to the preferential entry of fluorescent dyes into white blood cells and the combination of nucleic acid substances, thus increasing the intracellular structure difference between blast cells and white blood cells, and increasing the difference of light signals, especially scattered light signals, so that blast cells and white blood cells can be better distinguished.

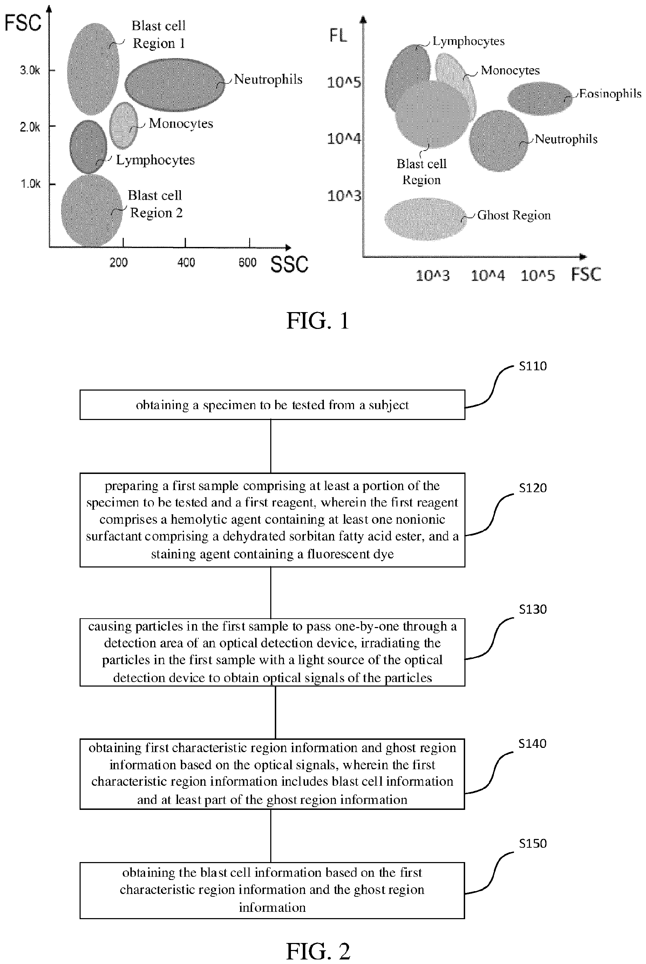

Reference is made to FIG. 1, which is a principle schematic diagram of a sample analysis method according to an embodiment of the present disclosure. It should be understood that this figure only schematically shows the relative positional relationship of the regions of occurrence of various particle swarms in each two-dimensional scatter plot, and for different blood samples, the specific regions of occurrence of various particle clusters may be different from those shown in the figure. The left graph of FIG. 1 is a schematic diagram of the regions of various white blood cells, blast cells and fragments of red blood cells after lysis (ghost) in the two-dimensional scatter diagram of side scattered light intensity and forward scattered light intensity obtained after optical detection by jointly treating a specimen with a dehydrated sorbitan fatty acid ester-based nonionic surfactant as hemolytic agents and a staining agent containing a nucleic acid fluorescent dye. It can be seen from the figure that blast cells may appear in either of the two regions (blast cell region I and blast cell region II) or in both regions at the same time. These two regions can be clearly distinguished from the regions where white blood cells, such as lymphocytes, monocytes and neutrophils appear, and only the lower blast cell region II partially overlaps with the ghost region. Therefore, the first characteristic region information including the blast cell information and at least a portion of the ghost region information can be obtained based on the information of particles in the blast cell region I and the blast cell region II. In the sample analysis method of this embodiment, taking a two-dimensional scatter plot formed by further using fluorescence light intensity and forward scattered light intensity as an example, referring to the right graph of FIG. 1, the ghost region is far away from the region where other cells appear in the dimension of fluorescence light intensity (ordinate), so that information of the whole ghost region can be obtained by the fluorescence signal, and information of the blast cells can be obtained based on the first characteristic region information (including the blast cell region I, the blast cell region II and part of the ghost region) obtained by the scattered light signal and the ghost region information obtained by the fluorescence signal.

Reference is further made to FIG. 2, which shows a flow diagram of a sample analysis method according to the embodiment of the present disclosure. The sample analysis method of this embodiment includes the following operations.

In S110, a specimen to be tested from a subject is obtained.

In S120, a first sample is prepared. The first sample includes at least a portion of the specimen to be tested and a first reagent, the first reagent includes a hemolytic agent containing at least one nonionic surfactant comprising a dehydrated sorbitan fatty acid ester, and a staining agent containing a fluorescent dye.

In S130, particles in the first sample is caused to pass one-by-one through a detection area of an optical detection device and the particles in the first sample are irradiated with a light source of the optical detection device to obtain optical signals of the particles.

In S140, first characteristic region information and ghost region information are obtained based on the optical signals, the first characteristic region information includes blast cell information and at least part of the ghost region information.

In S150, the blast cell information is obtained based on the first characteristic region information and the ghost region information.

In S110, the specimen to be tested from a subject is obtained. The specimen to be tested may be blood from the subject, especially peripheral blood.

In S120, the specimen to be tested or part of the specimen to be tested is treated with the first reagent to prepare the first sample. The first reagent includes a hemolytic agent containing at least one nonionic surfactant comprising a dehydrated sorbitan fatty acid, and a staining agent containing a fluorescent dye.

As described above, the inventors found that the cell membranes of white blood cells and blast cells in the sample can be treated differently while the red blood cells are lysed by using the dehydrated sorbitan fatty acid-based nonionic surfactant as the hemolytic agent. In the hemolytic agent, the concentration of the dehydrated sorbitan fatty acid-based nonionic surfactant as the hemolytic agent is in the range of 0.2g/L to 2g/L. In a preferred embodiment, the concentration of the dehydrated sorbitan fatty acid ester-based nonionic surfactant is in the range of 0.3 g/L to 1.5g/L. The present disclosure does not particularly limit the concentration of the dehydrated sorbitan fatty acid-based nonionic surfactant as a hemolytic agent in the first reagent, and a concentration suitable for red blood cells lysis can be selected.

In a specific embodiment, the dehydrated sorbitan fatty acid ester-based nonionic surfactant is selected from a group consisting of Tween and Span. Preferably, Tween can be selected from types of Tween 20 ~ Tween 100, and Span can be selected from types of Span 40 ~ Span 80. In this embodiment, any one of the above types of Tween and Span can be used as the hemolytic agent, or two or more of them can be selected together as the hemolytic agent. As shown in the following examples, when specimens are treated with different types of Tween or Span as the hemolytic agent, the differentiated effects on the optical signals of blast cells and mature white blood cells are generally similar.

The hemolytic agent also includes a cosolvent, a buffer agent, an anticoagulant and the like.

Cosolvents can help the fluorescent dye enter cells. The concentration of the cosolvent can be in the range of 0.1g/L to 10g/L, preferably 2 g/L to 5g/L. Substances that can be used as cosolvents are amphiphilic small molecules. Specifically, the cosolvent may be selected from sodium lauryl sarcosine, sodium lauryl methyl hydroxyethyl sulfonate, sodium lauryl hydroxyethyl sulfonate and the like, and sodium lauryl sarcosine is preferred.

The buffer agent is used to maintain the pH value of the hemolytic agent, which is usually 7.4 and can be adjusted according to specific situations. The present disclosure does not particularly limit the species and concentration of the buffer agent in the hemolytic agent. Any commonly used buffer pairs and conventional use concentrations may be used. As an example, a buffer pair may be selected from but are not limited to phosphoric acid and its salt, citric acid and its salt, acetic acid and its salt, and the like. As an example, the concentration of the buffer agent may be from 0.1 g/L to 10g/L.

The present disclosure does not particularly limit species and concentration of an anticoagulant in the hemolytic agent. Any commonly used anticoagulants and conventional use concentrations may be used. As an example, the anticoagulant may be, but is not limited to, EDTA. As an example, the concentration of the anticoagulant may be from 0.05g/L to 2g/L, preferably 0.2 g/L to 1g/L.

The staining agent in the first reagent contains a fluorescent dye for binding to intracellular nucleic acid substances of a blood cell in the sample and emitting a fluorescent signal under excitation of a light source of an appropriate wavelength. The present disclosure does not particularly limit the species of the fluorescent dye in the staining agent. The nucleic acid fluorescent dye used for detecting white blood cells can be used as the staining agent in the first reagent. For example, suitable staining agent can be selected according to the excitation wavelength of an excitation light source in different devices.

For example, the fluorescent dye may be a compound represented by the following Formula I: 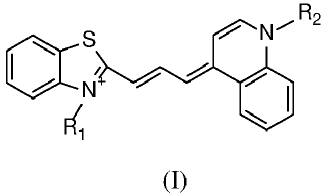 where R1 and R2 are each independently selected from C2-C8 alkanes.

For example, specific compounds of Formula I are the following dye A and dye B:

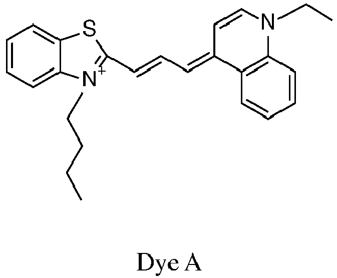

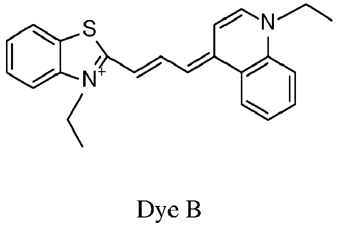

The dye represented by Formula I can be excited by red light.

For example, the fluorescent dye may also be a compound represented by the following Formula II: 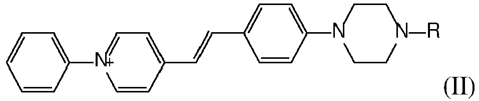 where R is selected from C2-C8 alkyl or H.

For example, a specific compound of Formula II is the following dye C:

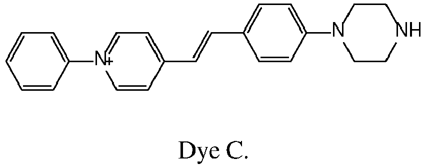

The dye represented by Formula II can be excited by blue light.

The fluorescent dye can be dissolved in a suitable solvent (such as methanol, ethanol, ethylene glycol, and the like) at a certain concentration to be used as a staining agent. The present disclosure is not limited on the use concentration of the fluorescent dye, and a conventional use concentration of the fluorescent dye may be used. For example, the concentration of the fluorescent dye in the first reagent is from 1mg/L to 500mg/L, preferably from 10mg/L to 50mg/L.

In the first reagent, the above hemolytic agent and staining agent are separate reagents that are mixed to form the first reagent only when or before treating the specimen to be tested. Alternatively, the hemolytic agent and the staining agent may also be packaged in a mixed form as the first reagent.

Typically, a specimen is treated using a mixture of the hemolytic agent and the staining agent in a ratio of about 50:1 (e.g., about 1mL of hemolytic agent and about 20 µL of staining agent) as the first reagent.

At least part of the specimen to be tested is treated with the first reagent, in particular by mixing the first reagent including the hemolytic agent and the staining agent with the specimen to be tested, and incubating the mixture at a temperature of such as 42°C, for a certain period of time, such as 10 to 30 seconds, for example 15 seconds or 20 seconds.

Next in S130, particles in the first sample is caused to pass one-by-one through a detection area of an optical detection device and the particles in the first sample are irradiated with a light source of the optical detection device to obtain optical signals of the particles. In S140, a first characteristic region information and a ghost region information are obtained based on the optical signals, in which the first characteristic region information includes blast cell information and at least part of the ghost region information.

In one embodiment, the obtained optical signals of particles include scattered light signals, in particular a side scattered light intensity signal and a forward scattered light intensity signal, and a first fluorescence light intensity signal from the staining agent containing a fluorescent dye.

Reference is made to the left graph of FIG. 1, in which a two-dimensional scatter plot of a side scattered light intensity signal and a forward scattered light intensity signal is schematically shown. blast cell region I and blast cell region II in the figure are the regions where blast cells may appear. It can be seen that after being treated with the first reagent, blast cells can be well distinguished from white blood cells by using the scattered light signals of particles. Accordingly, S40 includes obtaining the first characteristic region information from the side scattered light intensity signal and the forward scattered light intensity signal, which includes the blast cell information in the blast cell region I and the blast cell region II, and also includes the ghost region information partially overlapping the blast cell region II.

Reference is made to the right graph of FIG. 1, in which a two-dimensional scatter plot formed using a first fluorescence light intensity signal and a side scattered light intensity signal is schematically shown. The fluorescence light intensity of the ghost region is lower than that of other cells, so it can be seen in the two-dimensional scatter plot that the ghost region is far away from the regions where other cells appear. It should be understood that the ghost refers to fragments of red blood cells, which is basically free of nucleic acid substances, thus it does basically not combine with the fluorescent dye, so the fluorescence light intensity is low. Thus, S140 further includes obtaining the ghost region information based on at least the first fluorescence light intensity signal.

In other embodiments, the ghost region information may also be obtained from the first fluorescence light intensity signal and the side scattered light intensity signal as shown in the right graph of FIG. 1. Alternatively, the ghost region information may also be obtained from the first fluorescence light intensity signal and the forward scattered light intensity signal.

In S150, the blast cell information is obtained based on the first characteristic region information and the ghost region information. In a specific embodiment, the operation includes subtracting the at least part of the ghost region information from the first characteristic region information to obtain the blast cell information.

In a first embodiment, the blast cell information includes a count and/or an alarm about blast cells, in particular the alarm.

According to the present disclosure, a second embodiment of the sample analysis method is also provided. Different from the sample analysis method of the first embodiment, by utilizing the difference between surface antigens of blast cells and mature white blood cells, and antibodies capable of binding to the respective surface antigens differently, such as monoclonal antibody CD45 or the like, the method of this embodiment allows a fluorescent-labeled such antibody binding to the surface antigens of the cells, as such the difference of optical signals between the blast cells and the white blood cells is enlarged under hemolytic situation, so as to distinguish blast cells from leukocytes.

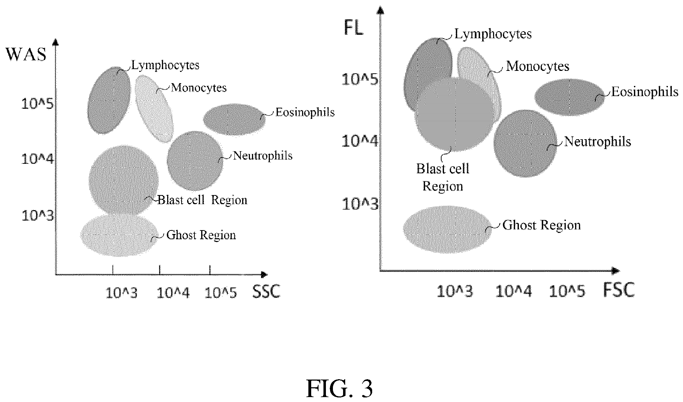

Reference is made to FIG. 3, which shows a principle schematic diagram of the sample analysis method according to the embodiment of the present disclosure. The left graph of FIG. 3 is a schematic diagram of the regions of various white blood cells, blast cells and fragments of red blood cells after lysis (ghosts) in the two-dimensional scatter diagram of CD45 fluorescence light intensity (WAS) and side scattered light intensity (SSC) obtained from optical detection after treating a specimen with a hemolytic agent, a staining agent containing a nucleic acid fluorescent dye and an antibody treatment agent containing a fluorescent labeled CD45. It is clear from the graph, the region of the blast cells is clearly distinguished from the regions where lymphocytes, monocytes and neutrophils appear, and only the lower part of the region slightly overlaps with the ghost region, so that the first characteristic region information including blast cell information and at least part of the ghost region information can be obtained from the blast cell region. According to the first characteristic region information, the blast cell information can be obtained, thereby alarming that blast cells may exist in the specimen.

However, the blast cell information obtained only from the first characteristic region information may contain part of the ghost region information, and thus it is not accurate enough. For example, it may lead to false positive results. For this reason, in the sample analysis method of this embodiment, the ghost region information is also further obtained by the fluorescence light intensity (FL) signal, so as to obtain more accurate blast cell information by the first characteristic region information and the ghost region information. Referring to the right graph of FIG. 3, it can be seen in the two-dimensional scatter plot formed by the fluorescence light intensity (FL) and the forward scattered light intensity (FSC) as in the first embodiment above that the ghost region is far away from the regions where other cells appear by way of the difference in the fluorescence light intensity. Then, the ghost region information is subtracted from the first characteristic region information (including the blast cell region and part of the ghost region) obtained by the CD45 fluorescence light intensity and the side scattered light intensity, so as to obtain the information of the blast cells.

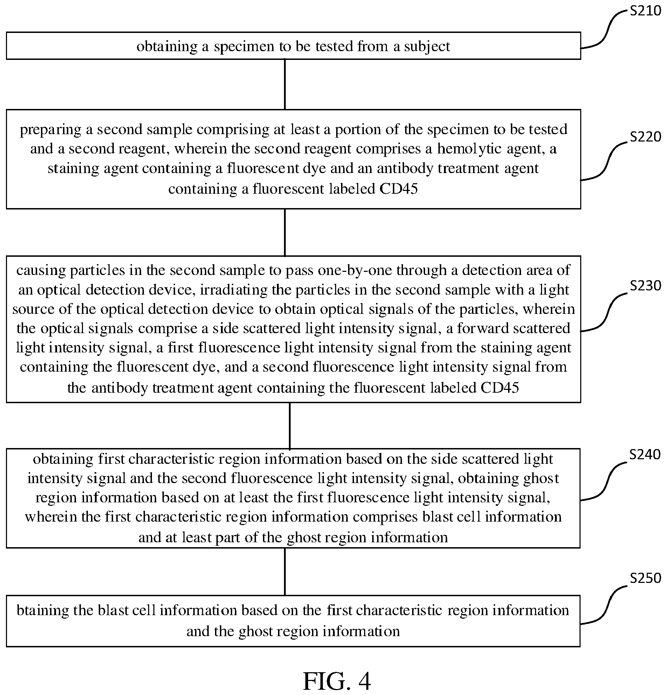

Reference is further made to FIG. 4, which is a flow diagram of a sample analysis method according to the embodiment of the present disclosure. The sample analysis method of this embodiment includes the following operations.

In S210, a specimen to be tested from a subject is obtained.

In S220, a second sample is prepared. The second sample contains at least a portion of the specimen to be tested and a second reagent, in which the second reagent includes a hemolytic agent, a staining agent containing a fluorescent dye and an antibody treatment agent containing a fluorescent labeled CD45.

In S230, particles in the second sample is caused to pass e through a detection area of an optical detection device one by on and the particles in the second sample are irradiated with a light source of the optical detection device to obtain optical signals of the particles, in which the optical signals include a side scattered light intensity signal, a forward scattered light intensity signal, a first fluorescence light intensity signal from the staining agent containing the fluorescent dye, and a second fluorescence light intensity signal from the antibody treatment agent containing the fluorescent labeled CD45.

In S240, a first characteristic region information is obtained based on the side scattered light intensity signal and the second fluorescence light intensity signal, a ghost region information is obtained based on at least the first fluorescence light intensity signal, in which the first characteristic region information includes blast cell information and at least part of the ghost region information.

In S250, blast cell information is obtained based on the first characteristic region information and the ghost region information.

S210 is the same as the previous S110 and will not be repeated herein.

In S220, the specimen to be tested or part of the specimen to be tested is treated with the second reagent to prepare the second sample. The second reagent includes a hemolytic agent, a staining agent containing a fluorescent dye, and an antibody treatment agent containing a fluorescent labeled antibody (e.g. CD45).

The antibody is an antibody capable of binding to the respective surface antigens of blast cells and white blood cells differently. Preferably the antibody is a monoclonal antibody. The term "antibody" mentioned in the present disclosure refers to those that have different binding abilities with surface antigens of various kinds of cells, thereby being able to distinguish blast cells from other white blood cells by antibody fluorescence light intensity and side scattered light intensity. In this particular embodiment, the antibody is CD45, and other embodiments may use other antibodies. The binding abilities of the antibody between surface antigens of white blood cells and blast cells are different, so that the blast cells can be obviously distinguished from white blood cells by the fluorescence signal emitted by a fluorescent marker linked to the antibody in combination with the side scattered light signals.

A fluorescent marker linked to the antibody, in particular CD45, may be any suitable fluorescent marker. The present disclosure does not particularly limit the fluorescent marker, so long as the fluorescent marker linked to the antibody does not affect the binding of the antibody to an antigen, nor does it affect the use of other reagents. The fluorescent substances that can be excited by the light source can be selected as markers according to the wavelength of the laser light source of a sample analyzer. In addition, in view of the detection, the fluorescence wavelength emitted by a fluorescent marker after being excited should be distinguished from the fluorescence wavelength emitted by the fluorescent dye in the staining agent that is bond with a nucleic acid. These fluorescent markers are well known to those skilled in the art. Exemplary fluorescent markers include FITC (blue light excitation), APC (red light excitation) and the like, but not limited thereto. Fluorescent labeled antibodies that have been commercialized, such as CD45-FITC, CD45-APC and the like, may also be used, but not limited thereto.

The antibody treatment agent is a buffer (e.g. phosphate buffer) containing the fluorescent labeled antibody. It also comprises other components, such as a preservative (such as sodium azide, ProClin series, etc.), a metal chelating agent (such as sodium salt of EDTA), an osmotic pressure regulator (such as sodium chloride, etc.).

The concentration of the fluorescent labeled CD45 in the second reagent is from 25µg/mL to 1000µg/mL, preferably from 50µg/mL to 250µg/mL.

In the second reagent, the hemolytic agent may be different from or the same as the hemolytic agent in the first reagent. In the second reagent, the hemolytic agent can be used as long as it can lyse red blood cells and does not interfere with components of other agents, because the optical signal different from that of white blood cells is mainly generated by the specific binding of the fluorescent labeled CD45 with surface antigens of blast cells. As an example, the hemolytic agent may include at least one surfactant selected from cationic surfactants, nonionic surfactants, alkyl glycosides, triterpenoid saponins, steroidal saponins, and diethylene glycol.

In some embodiments, the hemolytic agent in the second reagent is selected from alkyl glycosides. Specifically, the alkyl glycoside may be a glycoside compound represented by general formula I:

R-(CH₂)n-CH₃ (I) .

R is selected from a group consisting of monosaccharide, deoxymonosaccharide and polysaccharide, and n is an integer from 5 to 17. All the hemolytic agents disclosed in Chinese patent application No.: CN111602052A can be used as hemolytic agents in the second reagent. The entire contents of the application are incorporated herein by reference. In other embodiments, the hemolytic agent may include diethylene glycol. Further preferably, formaldehyde which fixes cells may also be included.

In other embodiments, the hemolytic agent includes a cationic surfactant, a nonionic surfactant, an aromatic organic acid, and/or a salt thereof. The aromatic organic acid may be one or more selected from the group consisting of terephthalic acid, phthalic acid, hydroxybenzoic acid, acetylsalicylic acid, p-aminobenzoic acid, benzenesulfonic acid, p-toluenesulfonic acid and hydroxybenzenesulfonic acid. The cationic surfactant is at least one selected from the group consisting of a quaternary ammonium salt and a pyridine onium salt. The nonionic surfactant is at least one selected from the group consisting of polyoxyethylene surfactants, Span and Tween. Specific examples include the hemolytic agents disclosed in Chinese Patent Application No.: CN 202210350953.5, which is incorporated herein by reference by its entirety.

In further embodiments, the hemolytic agent in the second reagent may be the same as the hemolytic agent in the first reagent, selected from the group consisting of dehydrated sorbitan fatty acid ester-based surfactants, preferably selected from the group consisting of Span and Tween. More preferably, Span is selected from Span 40 ~ Span 80, and Tween is selected from Tween 20 ~ Tween 100.

The present disclosure does not particularly limit the concentration of the surfactant as the hemolytic agent in the second reagent, and when different hemolytic agents are used, the conventional concentration of different hemolytic agents can be selected. The concentration of the dehydrated sorbitan fatty acid ester-based nonionic surfactant is in the range of 0.2 g/L to 2g/L. In a preferred embodiment, the concentration of the surfactant is in the range of 0.3 g/L to 1.5g/L. The hemolytic agent also includes a cosolvent, a buffer agent, an anticoagulant and the like. The types and contents of these components may be the same as those of the hemolytic agent in the first reagent described above, and will not be repeated again.

In a preferred embodiment, the hemolytic agent in the second reagent is the same as the hemolytic agent in the first reagent. In this embodiment, the differences between the blast cells and the white blood cells are further enlarged from a scattered light signal (e.g., the side scattered light intensity), so that the blast cells can be better distinguished from the white blood cells.

The staining agent in the second reagent, if presents, is the same as the staining agent in the first reagent and will not be described again. In a preferred embodiment, the fluorescent dye in the staining agent is preferably a dye that can be excited by blue light. For example, the fluorescent dye may be a compound represented by the above Formula II:

Similar to the first reagent, in one embodiment, the hemolytic agent, the staining agent and the antibody treatment agent are separately packaged reagents that are mixed to form the second reagent only when or before treating the specimen to be tested. In another embodiment, any two or three of the hemolytic agent, the staining agent and the antibody treatment agent are packaged in a mixed form as one reagent. For example, the fluorescent labeled CD45 may be added to the hemolytic agent at the above concentration to form a reagent packaged in a mixed form.

At least part of the specimen to be tested is treated with the second reagent, in particular by mixing the antibody treatment agent with the specimen to be tested, and incubating at a temperature such as 37°C to 42°C, for a certain period of time, such as 30 to 180 seconds. Then, a certain amount of the mixed solution is added to and mixed with the hemolytic agent and staining agent, and further incubated at a certain temperature, such as 42°C for a certain period of time, for example, 10 to 30 seconds.

In S230, particles in the second sample is caused to pass one-by-one through a detection area of an optical detection device and the particles in the second sample are irradiated with the light source of the optical detection device to obtain optical signals of the particles. The optical signals includes a side scattered light intensity signal, a forward scattered light intensity signal, a first fluorescence light intensity signal from the staining agent containing the fluorescent dye, and a second fluorescence light intensity signal from the antibody treatment agent containing the fluorescent labeled antibody (such as CD45).

Next in S240, a first characteristic region information is obtained based on the side scattered light intensity signal and the second fluorescence light intensity signal, a ghost region information is obtained based on at least the first fluorescence light intensity signal, The first characteristic region information includes blast cell information and at least part of ghost region information. In S250, the blast cell information is calculated based on the first characteristic region information and the ghost region information.

In other embodiments, in S240, the ghost region information may also be obtained based on the first fluorescence light intensity signal and any one of the side scattered light intensity signal and the forward scattered light intensity signal.

S230 to S250 in the second embodiment are similar to S130 to S150 in the first embodiment, except that the first characteristic region information is obtained by the side scattered light intensity signal and the second fluorescence light intensity signal from the fluorescent labeled CD45. Referring to the left graph of FIG. 3, a two-dimensional scatter plot of the second fluorescence light intensity of a fluorescent labeled CD45 and the side scattered light intensity of the second sample obtained after the specimen to be tested is treated with the second reagent is schematically shown. The region where the blast cells appear (blast cell region) is one region (whereas in the first embodiment, the blast cells may appear in either or both of two non-contiguous regions) and is better distinguished from white blood cells (lymphocytes, monocytes, neutrophils and eosinophils). The overlapping area of the lower part of the blast cell region and the ghost region is also smaller than that of the first embodiment.

Then, the ghost region information is also obtained from at least the first fluorescence light intensity signal, and in S250, the blast cell information is obtained based on the first characteristic region information and the ghost region information. Specifically, obtaining the blast cell information also includes subtracting the at least part of the ghost region information from the first characteristic region information to obtain the blast cell information. In a preferred embodiment, the ghost region information overlapped in the blast cell region is subtracted from the first characteristic region information, so that more accurate blast cell information is obtained and false detection results can be avoided.

In one embodiment, the blast cell information includes a count and/or an alarm about blast cells. In particular, the above-described preferred embodiment of the second embodiment can count the blast cells.

According to disclosure, a third embodiment of the sample analysis method is provided. The embodiment is similar to the first embodiment mentioned above. A hemolytic agent (not limited to the hemolytic agent in the first reagent mentioned above) is used to treat respective the cell membranes of mature white blood cells and those of blast cells differently in the specimen, The forward scattered light intensity and the side scattered light intensity are used to obtain the first characteristic region including the blast cell information. The first fluorescence signal emitted by a nucleic acid dye is used to deduct the ghost information from the first characteristic region, so as to obtain the blast cell information.

Specifically, the sample analysis method of this embodiment includes the following operations.

In S310, a specimen to be tested is obtained from a subject.

In S320, a third sample is prepared. The third sample comprises at least a portion of the specimen to be tested and a third reagent, in which the third reagent comprises at least a hemolytic agent capable of treating respective cell membranes of mature white blood cells and those of blast cells differently in the third sample, and a staining agent containing a fluorescent dye.

In S330, particles in the third sample is caused to pass one-by-one through a detection area of an optical detection device, the particles in the third sample are irradiated with a light source of the optical detection device to obtain optical signals of the particles. The optical signals comprise a side scattered light intensity signal, a forward scattered light intensity signal, a first fluorescence light intensity signal from the staining agent containing the fluorescent dye.

In S340, a first characteristic region information is obtained based on the side scattered light intensity signal and the forward scattered light intensity signal, a ghost region information is obtained based on at least the first fluorescence light intensity signal, wherein the first characteristic region information comprises blast cell information and at least part of ghost region information.

In S350, the blast cell information is obtained based on the first characteristic region information and the at least part of ghost region information.

S310 in this embodiment is similar to S110 in the above-mentioned first embodiment.

S320 is similar to S120 of the above-mentioned first embodiment in that the specimen is treated by the reagent containing a hemolytic agent and a staining agent. The difference between the two is in that the hemolytic agent of the third agent is not limited to a dehydrated sorbitan fatty acid ester-based nonionic surfactant, but other hemolytic agents capable of treating respective the cell membranes of mature white blood cells and those of blast cells differently in the specimen can also be used. As an example, the type of hemolytic agent includes but is not limited to the above-mentioned dehydrated sorbitan fatty acid ester-based nonionic surfactant, polyoxyethylene-based nonionic surfactant, nitrogen-containing nonionic surfactant, and block polyether non-ionic surfactant.

Examples of polyoxyethylene-based nonionic surfactants includes polyoxyethylene oleyl ether, primary alcohol polyoxyethylene ether, secondary alcohol polyoxyethylene ether, branched-chain isomerized Guerbet alcohol ether, alkyl phenol polyoxyethylene ether, fatty acid methyl ester polyoxyethylene ether, and the like.

Examples of nitrogen-containing non-ionic surfactant include Coconut oil alkyl alkyl amide phosphate and the like.

Examples of block polyether non-ionic surfactant include propylene glycol block polyether, ethylene glycol block polyether and the like.

These surfactants serving as a hemolytic agent can treat cells membranes of blast cells and those of mature white blood cells differently, resulting in difference in the amount and type of substance that ends up inside the cells, so as to further enlarge the difference of the light signal between blast cells and mature white blood cells.

When other non-ionic surfactants are used as the hemolytic agent, the use concentration can be adjusted according to the properties of different surfactants. For example, the polyoxyethylene-based non-ionic surfactants as a hemolytic agent may have a concentration of 0.1g/L to 20g/L, preferably 0.5 g/L to 5 g/L.

In addition to the hemolytic agent included in the third agent, it also includes other necessary agent, such as co-solvents, buffer agent, anticoagulants, or the like, which will not be repeated here.

The third sample prepared by mixing and incubating the third reagent with the specimen to be tested is also caused to pass through the detection area of the optical detection device in S330 to obtain the optical signal of the particles therein. The optical signal includes a side scattered light intensity signal, a forward scattered light intensity signal, and a first fluorescence light intensity signal from a staining dye containing a fluorescent dye.

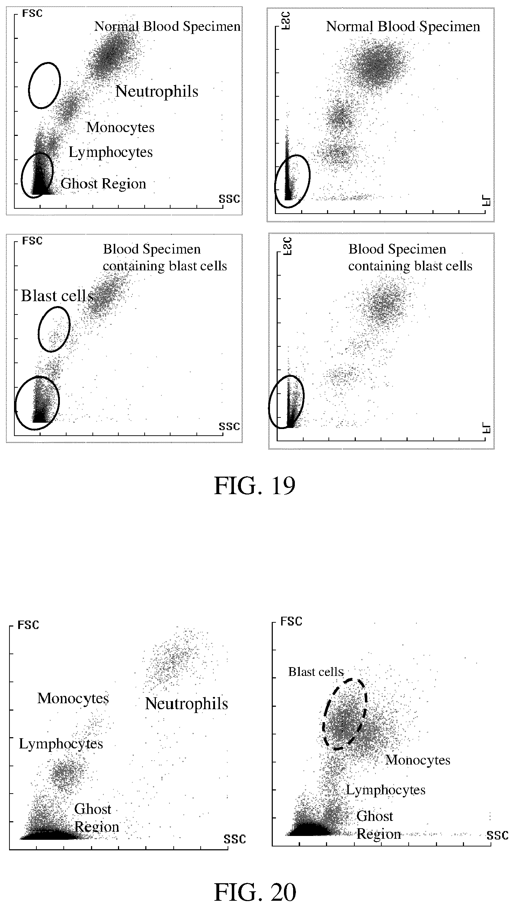

Next, in S340, the first characteristic region information is obtained based on the side scattered light intensity signal and the forward scattered light intensity signal. Reference is made to FIG. 19, which shows a specific example of the treatment and detection of specimens from a healthy subject (upper two graphs) and a patient (lower two graphs) using the third agent containing polyoxyethylene oleyl ether as the hemolytic agent, a two-dimensional scatter plot formed by the side scattered light intensity signal and the forward scattered light intensity signal (left two graphs) and a two-dimensional scatter plot formed by the side scattered light intensity signal and the fluorescent light signal (right two graphs). Similar to the left graph of FIG. 1, the two regions circled in the left lower graph of FIG. 19 are regions where blast cells may appear, that is the first characteristic region. Blast cells may apper in either or both regions. Both the two regions can be clearly distinguished from regions where white blood cells such as lymphocytes, monocytes, and neutrophils occur, with only the lower blast cells region partially overlapping with the ghost region. There is a significant increase in the number of particles in the first characteristic region compared to the scatter plot obtained from the specimen of the healthy subject (upper left graph). In the lower right graph, the ghost region is circled, which is far away from the regions where other cells appear in terms of fluorescence light intensity, so that all the ghost region information can be obtained through the fluorescence signals. The blast cells information can be obtained based on the first characteristic region information including a part of ghost region information obtained by the scattered light signal and the ghost region information obtained by the fluorescence signal.

Further in S340, the ghost region information is obtained at least based on the first fluorescence light intensity signal. Similar to the right graph of FIG. 1, the fluorescence light intensity in the ghost region of the lower right graph is lower than the fluorescence light intensity of other cells, so it is clear that the ghost region is far away from the regions where other cells appear, so that all the ghost region information can be obtained based on the fluorescence signal.

In a specific embodiment, the ghost region information can be obtained by only the first fluorescence light intensity signal, or one scattered light signal (side scattered light intensity signal or forward scattered light intensity signal) combined with the first fluorescence light intensity signal.

In S350, the blast cells information is obtained based on the first characteristic region information and at least part of the ghost region information. In a specific embodiment, the blast cells information can be obtained by subtracting the ghost region information obtained by the fluorescence signal from the first characteristic region information containing part of the ghost region information obtained by the scattered light signal.

In the embodiment, the blast cells information includes a count and/or an alarm about blast cells, in particular the alarm.

According to the disclosure, a fourth embodiment of the sample analysis method is provided. In the embodiment, without using a staining agent, a hemolytic agent (such as a dehydrated sorbitan fatty acid ester-based nonionic surfactant) is used to treat respective the cell membranes of mature white blood cells and those of blast cells differently in the specimen, The forward scattered light intensity and the side scattered light intensity are used to obtain the first characteristic region including the blast cell information, so as to obtain the blast cell information.

Specifically, the sample analysis method of this embodiment includes the following operations.

In S410, a specimen to be tested is obtained from a subject;

In S420, a fourth sample is prepared. The fourth sample comprises at least a portion of the specimen to be tested and a fourth reagent, wherein the fourth reagent comprises a hemolytic agent containing at least one nonionic surfactant comprising a dehydrated sorbitan fatty acid ester.

In S430, particles in the fourth sample is caused to pass one-by-one through a detection area of an optical detection device, the particles in the fourth sample are irradiated with a light source of the optical detection device to obtain optical signals of the particles, wherein the optical signals comprise a side scattered light intensity signal and a forward scattered light intensity signal.

In S440, a first characteristic region information is obtained based on the side scattered light intensity signal and the forward scattered light intensity signal, wherein the first characteristic region information comprises blast cell information.

In S450, the blast cell information is obtained based on the first characteristic region information.

S410 of this embodiment is similar to S110 of the first embodiment above.

S420 is similar to S120 in the first embodiment above, except that the fourth agent does not include a staining agent, but only a hemolytic agent. The hemolytic agent is identical to the hemolytic agent in the first reagent and contains at least one nonionic surfactant comprising a dehydrated sorbitan fatty acid ester, which enables treat respective the cell membranes of mature white blood cells and those of blast cells cells differently in the specimen. The dehydrated sorbitan fatty acid ester-based nonionic surfactant, is defined as that in the first embodiment, is not repeated here.

The fourth sample prepared by mixing and incubating the fourth reagent with the specimen to be tested is caused to pass through the detection area of the optical detection device in S430, to obtain the scattered light signal of the particles therein. The scattered light signal includes a side scattered light intensity signal and a forward scattered light intensity signal.

Next in S440, The first characteristic region information including the blast cell information is obtained based on the side scattered light intensity signal and the forward scattered light intensity signal. Reference is made to FIG. 20, which shows a specific embodiment of the treatment and detection of specimens from a healthy subject (left) and a patient (right) with a fourth agent containing a hemolytic agent but not a fluorescent dye, in which the two-dimensional scatter plot is formed by a side scattered light intensity signal and a forward scattered light intensity signal. The regions where blast cell may appear are circled on the right graph, including a large number of particles, while the corresponding regions on the left graph show only a few particles. It can be seen that after the treatment of the fourth reagent, the blast cells can be distinguished from the white blood cells to a certain extent by the scattered light signal of the particles.

In S450, the blast cell information is obtained based on the first characteristic region information.

In the embodiment, the first characteristic region can indicate the presence of blast cells in the sample, so that the blast cell information obtained based on the first characteristic region can alarm the specimen containing blast cells. The method of the embodiment does not require the use of fluorescent dyes, thus reducing the cost of detection.

According to the present disclosure, a fifth embodiment of the sample analysis method is provided. The embodiment is different from the two above-mentioned embodiments in that, the method further includes an operation of receiving an operation instruction. After receiving operation instructions, blast cell detection is carried out on a specimen. The specific detection operations are the operations of the sample analysis method in any one of the first embodiment or the fourth embodiment and will not be repeated herein.

The sample analysis method of each embodiment enlargeds the difference of optical signals between the blast cells and the white blood cells by using the first to fourth reagent to treat respective the blast cells and the white blood cells differently, and well distinguish them, so that the blast cells information can be obtained by using the methods, and the detection accuracy is improved. The methods can alarm the blast cells in the sample more accurately, and the counting of the blast cells can be realized in a preferred embodiment.

In addition, acute lymphoblastic leukemia has a rapid onset and great harm, but there is a lack of high sensitivity detection methods for blast cells of acute lymphoblastic leukemia at present. The sample analysis methods provided by the present disclosure are more sensitive and accurate for blast cell detection of blood specimens from acute lymphoblastic leukemia patients.

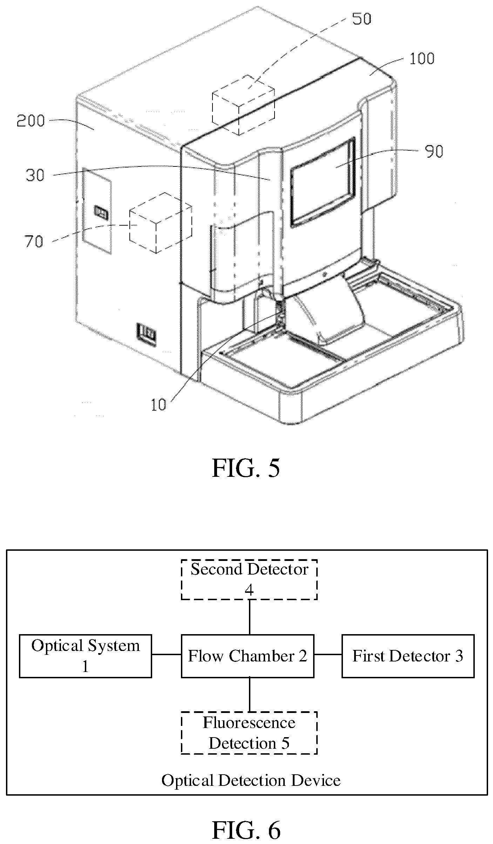

The present disclosure also provides a sample analyzer to perform the above sample analysis method. Exemplary embodiments of the sample analyzer are described in detail below with reference to FIG. 5 to FIG.6.

The sample analyzer of the first embodiment refers to FIG. 5 where the sample analyzer is schematically shown. The sample analyzer includes a specimen aspiration device 10, a sample preparation device (30), an optical detection device 50 including a light source, a flow chamber, a processor 70, and a non-transitory computer-readable storage medium (not shown) programmed with computer program instructions.

The specimen aspiration device 10 is configured to aspirate at least a portion of the specimen to be tested and transport it to the sample preparation device. Some of or all of the specimen to be tested can be taken as needed to detect the blast cells in the specimen. The specimen aspiration device 10 may aspirate a portion of the specimen to be tested several times for use including the above-mentioned blast cell detection and other detection items such as white blood cell detection, platelet detection, hemoglobin detection and the like, but is not limited thereto. The specimen aspiration device can also aspirate a certain amount of the specimen at one time and divide them into several sub-specimens for different treatments and detections, respectively.

The sample preparation device 30 includes a reagent supply part and a reaction cell. The specimen aspiration device 10 and the reagent supply part are respectively connected to the reaction cell through pipelines. As required, the reagent supply part may deliver a specific reagent to a specific reaction cell to be mixed with the specimen to be tested provided by the specimen aspiration device, to prepare a sample for a predetermined detection purpose.

In the first embodiment, the reagent supply part is configured to supply the first reagent to the reaction cell. The first reagent, as described above, includes a hemolytic agent containing at least one nonionic surfactant comprising a dehydrated sorbitan fatty acid ester (preferably selected from Tween and Span) and a staining agent containing a fluorescent dye, which is not repeated herein. The reagent supply part includes a plurality of reagent storage containers, and the hemolytic agent and the staining agent in the first reagent are stored in different storage containers; or the hemolytic agent and the staining agent are stored in a mixed form in one storage container. The reaction cell is configured to mix the first reagent with at least a portion of the specimen to be tested therein to obtain the first sample, and to transport the first sample to the flow chamber. The reaction cell can be heated to a suitable reaction temperature, so as to obtain the best treatment effect of the sample.

The specimen to be tested in the reaction cell is treated with the first reagent to prepare the first sample, and the first sample is transported to the optical detection device 50 through the pipeline assembly to obtain the optical signals of each particle in the sample.

The optical detection device 50 includes a light source, a flow chamber and at least one, typically a plurality of optical detectors. The light source is configured to align a light beam with a detection hole of the flow chamber which is connected with the reaction cell. The flow chamber is configured to allow particles in the sample to pass through one by one. The optical detectors are mounted around the flow chamber for detecting optical signals of particles passing through the detection hole of the flow chamber.

Referring to FIG. 6, a schematic structural block diagram of an optical detection device is shown. As shown in FIG. 6, the optical system 1 and the flow chamber 2 are arranged on an optical axis. The optical system 1 includes a light source and a lens group for aligning the light emitted by the light source with a detection hole on the flow chamber 2. A plurality of optical detectors are arranged around the flow chamber 2 for detecting light scattered signals and a fluorescence signal of particles passing through the detection hole one by one. The optical detectors generally include a first detector 3, a second detector 4 and a fluorescence detector 5. The light scattered signal includes a forward light scattered intensity signal emitted from the optical system 1 and transmitted through the flow chamber 2 collected by the first detector 3 arranged on the optical axis, and a side light scattered intensity signal emitted from the flow chamber 2 collected by the second detector 4 arranged on a side of the optical axis. In addition, the optical detectors further include a fluorescence detector 5 arranged on a side of the optical axis for collecting the fluorescence light intensity signal emitted from the flow chamber 2. According to different treatment of specimens, each detector can collect scattered light intensity signal and fluorescence light intensity signal from each particle in different samples. In the first embodiment, the fluorescence detector 5 is used to collect the fluorescence light intensity signal emitted by the fluorescent dye bound with nucleic acids in the particles.

The processor 70 is operably connected to the optical detectors, and optical signals of particles detected by the optical detectors are transmitted to the processor 70 for analysis. The signals are amplified by an amplifier and transmitted to the processor 70.

When the computer program instructions programed in the non-transitory computer-readable storage medium are executed by the processor 70, the processor 70 obtains corresponding particle information according to the received optical signals, and executes operations for obtaining the blast cell information according to the sample analysis method in the above embodiments.

In a first embodiment, when the computer program instructions programed in the non-transitory computer-readable storage medium are executed by the processor 70, the processor performs the following operations. The first characteristic region information and ghost region information is obtained based on the optical signals. The first characteristic region information includes blast cell information and at least part of ghost region information. The blast cell information is obtained based on the first characteristic region information and the ghost region information.

Further, the optical signals in this embodiment includes a side scattered light intensity signal, a forward scattered light intensity signal, and a first fluorescence light intensity signal from the staining agent containing a fluorescent dye.

The operation of obtaining a first characteristic region information and a ghost region information based on the optical signals performed by the processor includes: obtaining the first characteristic region information based on the side scattered light intensity signal and the forward scattered light intensity signal, and obtaining the ghost region information based on at least the first fluorescence light intensity signal.

Obtaining the ghost region information base on at least the first fluorescence light intensity signal includes obtaining the ghost region information based on the first fluorescence light intensity signal; or obtaining the ghost region information based on the first fluorescence light intensity signal and any one of the side scattered light intensity signal and the forward scattered light intensity signal.

The operation of obtaining the blast cell information based on the first characteristic region information and the ghost region information performed by the processor includes subtracting at least part of the ghost region information from the first characteristic region information to obtain the blast cell information.

The present disclosure also provides a sample analyzer of the second embodiment. Still referring to FIG. 5, the sample analyzer also includes a specimen aspiration device 10, a sample preparation device 30 including a reagent supply part and a reaction cell, an optical detection device 50 (further referring to FIG. 6) including a light source, a flow chamber and optical detectors, a processor 70, and a non-transitory computer-readable storage medium (not shown) programmed with computer program instructions.

In this embodiment, the same parts as the sample analyzer of the first embodiment will not be repeated and only parts of the sample analyzer of the second embodiment that are different from the first embodiment will be described herein.

In the sample analyzer of the second embodiment, the reagent supply part is configured to supply the second reagent to the reaction cell. In this embodiment, the second reagent is the same as previously described and includes a hemolytic agent, a staining agent containing a fluorescent dye, and a treatment agent containing a fluorescent labeled antibody (in particular, such as CD45), which will not be repeated here. The reagent supply part includes a plurality of reagent storage containers, and the hemolytic agent, the staining agent and the antibody treatment agent are stored in different storage containers separately; or any two or three of the hemolytic agent, the staining agent and the antibody treatment agent are stored in a mixed form in one storage container. The reaction cell is configured to mix the second reagent with at least a portion of the specimen to be tested therein to obtain a second sample, and to transport the second sample to the flow chamber.

The configuration of the optical detection device 50 is further referred to in FIG. 6. In this embodiment, the second reagent includes both a staining agent containing a fluorescent dye and an antibody treatment agent containing a fluorescent labeled antibody. In one embodiment, the light source may be a single light source in which a single wavelength of excitation light emitted by the light source is capable of simultaneously exciting the fluorescent dye and the fluorescent marker bound to the antibody, and the fluorescence emitted by them have different wavelengths that can be detectable separately. In another embodiment, the light source may also be a dual-light source capable of emitting excitation light of different wavelengths for exciting the fluorescent dye and the fluorescent marker bound to the antibody, respectively. Similar to the first embodiment, light emitted from the optical system 1 and transmitted through the flow chamber 2 is collected by the first detector 3 arranged on the optical axis as a forward light scattered intensity signal, a lateral light scattered intensity signal emitted from the flow chamber 2 is collected by the second detector 4 arranged on the side of the optical axis, and a fluorescence light intensity signal emitted from the flow chamber 2 is collected by the fluorescence detector 5 arranged on the side of the optical axis. Different from the first embodiment, in the second embodiment, the fluorescence detector 5 is used to collect a first fluorescence light intensity signal (if any) from the fluorescent dye to which nucleic acid is bound and the second fluorescence light intensity signal from a fluorescent labeled antibody (e.g. CD45). As previously described, the first fluorescence light intensity signal from the fluorescent dye and the second fluorescence light intensity signal from the fluorescent labeled antibody have different wavelengths and can thus be collected separately. In a specific embodiment, the fluorescence detector 5 may include two fluorescence sub-detectors corresponding to different wavelengths of the first and second fluorescence signals respectively, to collect the first and second fluorescence light intensity signals.

The processor 70 is operably connected to the optical detectors. When the computer program instructions programed in the non-transitory computer-readable storage medium are executed by the processor, the processor is caused to perform the following operations. First characteristic region information is obtained based on the side scattered light intensity signal and the second fluorescence light intensity signal, and ghost region information is obtained based on at least the first fluorescence light intensity signal, in which the first characteristic region information includes blast cell information and at least part of ghost region information. The blast cell information is obtained based on the first characteristic region information and the ghost region information.

Obtaining the ghost region information base on at least the first fluorescence light intensity signal includes obtaining the ghost region information based on the first fluorescence light intensity signal; or obtaining the ghost region information based on the first fluorescence light intensity signal and any one of the side scattered light intensity signal and the forward scattered light intensity signal.

Obtaining the blast cell information based on the first characteristic region information and the ghost region information includes subtracting at least part of the ghost region information from the first characteristic region information to obtain the blast cell information.

The disclosure further provides a sample analyzer of a third embodiment. Still referring to FIG. 5, the sample analyzer also includes a sample aspiration device 10, a sample preparation device 30 including a reagent supply part and a reaction cell, an optical detection device 50 (further referring to FIG. 6) including a light source, a flow chamber and optical detectors, a processor 70, and a non-transitory computer-readable storage medium (not shown) programmed with computer program instructions.

In this embodiment, the same parts as the sample analyzer of the first embodiment will not be repeated and only parts of the sample analyzer of the third embodiment that are different from the first embodiment will be described herein.

In the sample analyzer of the third embodiment, the reagent supply part is configured to supply the third reagent to the reaction cell. In this embodiment, the third reagent is the same as previously described and includes a hemolytic agent capable of treating respective cell membranes of mature white blood cells and that of blast cells differently and a staining agent containing a fluorescent dye, which will not be repeated here. The reagent supply part includes a plurality of reagent storage containers, and the hemolytic agent and the staining agent are stored in different storage containers separately; or the hemolytic agent and the staining agent are stored in a mixed form in one storage container. The reaction cell is configured to mix the third reagent with at least a portion of the specimen to be tested therein to obtain a third sample, and to transport the sample to the flow chamber.

The third sample after the treatment of the third reagent is caused to pass through the optical detection device 50 (still referring to FIG. 6, the structure may be identical with the optical detectors in the sample analyzer of the first embodiment) to obtain the light signals of each of the particles. The light signal includes the forward scattered light intensity signal, a side scattered light intensity signal and a first fluorescence light intensity signal collected by the first detector 3, the second detector 4 and the fluorescent detector 5, respectively.

The processor 70 is operably connected to the optical detectors. When the computer program instructions programed in the non-transitory computer-readable storage medium are executed by the processor, the processor is caused to perform the following operations. First characteristic region information is obtained based on the side scattered light intensity signal and the forward scattered light intensity signal, and ghost region information is obtained based on at least the first fluorescence light intensity signal, in which the first characteristic region information includes blast cell information and at least part of ghost region information. The blast cell information is obtained based on the first characteristic region information and the at least part of ghost region information.

Obtaining the ghost region information base on at least the first fluorescence light intensity signal includes obtaining the ghost region information based on the first fluorescence light intensity signal; or obtaining the ghost region information based on the first fluorescence light intensity signal and any one of the side scattered light intensity signal and the forward scattered light intensity signal.

The disclosure further provides a sample analyzer of a fourth embodiment. Still referring to FIG. 5, the sample analyzer also includes a sample aspiration device 10, a sample preparation device 30 including a reagent supply part and a reaction cell, an optical detection device 50 (further referring to FIG. 6) including a light source, a flow chamber and optical detectors, a processor 70, and a non-transitory computer-readable storage medium (not shown) programmed with computer program instructions.

In this embodiment, the same parts as the sample analyzer of the first embodiment will not be repeated and only parts of the sample analyzer of the fourth embodiment that are different from the first embodiment will be described herein.

In the sample analyzer of the fourth embodiment, the reagent supply part is configured to supply the fourth reagent to the reaction cell. In this embodiment, the fourth reagent is the same as previously described and includes a hemolytic agent containing at least one nonionic surfactant comprising a dehydrated sorbitan fatty acid ester, which will not be repeated here. The reaction cell is configured to mix the fourth reagent with at least a portion of the specimen to be tested to obtain a fourth sample, and to transport the sample to the flow chamber.

The fourth sample after the treatment of the fourth reagent is caused to pass through the optical detection device 50 (still referring to FIG. 6, the structure may be identical with the optical detectors in the sample analyzer of the first embodiment, or include only the first detector 3 and the second detector 4, but not include the fluoreascent detector 5) to obtain the light signals of each of the particles. The light signal includes the forward scattered light intensity signal and a side scattered light intensity signal collected by the first detector 3 and the second detector 4, respectively.

The processor 70 is operably connected to the optical detectors. When the computer program instructions programed in the non-transitory computer-readable storage medium are executed by the processor, the processor is caused to perform the following operations. First characteristic region information is obtained based on the side scattered light intensity signal and the forward scattered light intensity signal. The first characteristic region information includes blast cell information. A reminder of the blast cell information is outputted based on the first characteristic region information.

In the first to fourth embodiments, the processor 70 is further operably connected with the specimen aspiration device 10, the reagent supply part, and the reaction cell to control the specimen aspiration device, the reagent supply part, and the reaction cell to perform the above-mentioned operations of aspiration the specimen to be tested to a specific reaction cell, and mixing and incubating with a specific reagent or reagent combination supplied to the reaction cell by the reagent supply part, in accordance with a computer application programed in the computer-readable storage medium, or upon receipt of a user instruction, to prepare a sample for blast cell detection. The processor further controls the reaction cell to transport the prepared sample to the optical detection device 50 to perform the above detection, and the processor 70 executes the above operations according to the received detection data to obtain the blast cell information.

According to various embodiments of the present disclosure with further reference to FIG. 5, the sample analyzer also includes an output device 90. In practice, the output device 90 includes a user interface for human-computer interaction. The user interface is configured to display detection results and/or input instructions to the sample analyzer. For example, in one embodiment, an instruction to perform blast cell detection is input by an operator through the user interface. For example, in another embodiment, the user interface displays detection results, i.e. blast cell information including for example blast cell count and/or alarm about the user.

In addition, the sample analyzer in the above embodiments may also have a first casing 100 and a second casing 200 (referring to FIG. 5). The sample preparation device 30 is disposed inside the first casing 100, and the output device 90 and the specimen aspiration device 10 are disposed on an outer surface of the first casing 100. The optical detection device 50 and the processor 70 are provided inside the second casing 200.

The present disclosure further provides a reagent for detecting blast cells. The reagent is any one of the first reagent and the second reagent, and the composition of the reagent will not be repeated here.

Using the sample analyzer of each embodiment, with the sample analysis method of each embodiment, the blast cells and white blood cells in the specimen to be tested are treated differently by using the reagent containing a specific hemolytic agent, thereby preparing corresponding samples and performing optical detection to obtain optical signals of each particle in the sample. The difference of cell membranes of blast cells and white blood cells is utilized to perform differentiation treatment by using the reagent, thus enlarges the difference of optical signals between blast cells and white blood cells, so that blast cells can be distinguished from white blood cells. The optical signal is analyzed, and more accurate blast cell information is obtained by utilizing the first characteristic region information including blast cell information and part of the ghost information and the ghost region information including only the ghost information, thus reducing the proportion of false negative and false positive. In particular, as described above, the reagent is highly sensitive to the blast cell detection in the blood of patients with acute lymphoblastic leukemia, and thus more accurate.

Therefore, the present disclosure further provides the use of the reagent for detecting blast cells in a sample using a sample analyzer. In a specific embodiment, detecting blast cells includes counting and/or alarming about blast cells.

The advantages of the present invention are further explained below by specific examples. The fluorescent dyes used in the examples are the aforementioned dyes A to C.

### EXAMPLE 1

According to the following formulation, the staining agent and hemolytic agent are prepared.
A: Staining agent

| | |
|---|---|
| Dye B | 25 mg |
| Ethylene glycol | 990ml |
| Dimethyl sulfoxide | 10ml. |

B: Hemolytic agent

| | |
|---|---|
| Potassium hydrogen phthalate | 1.2 g |
| HEPES | 0.5 g |
| Proclin300 | 0.3 g |
| Sodium hydroxide | 0.25 g |
| EDTA | 0.2 g |
| Sodium lauryl sarcosine | 0.6 g |
| Tween 80 | 0.3 g |
| Water | balanced to 1 L |

NaOH or HCl was adopted to adjust the pH value of the hemolytic agent to 7.4.

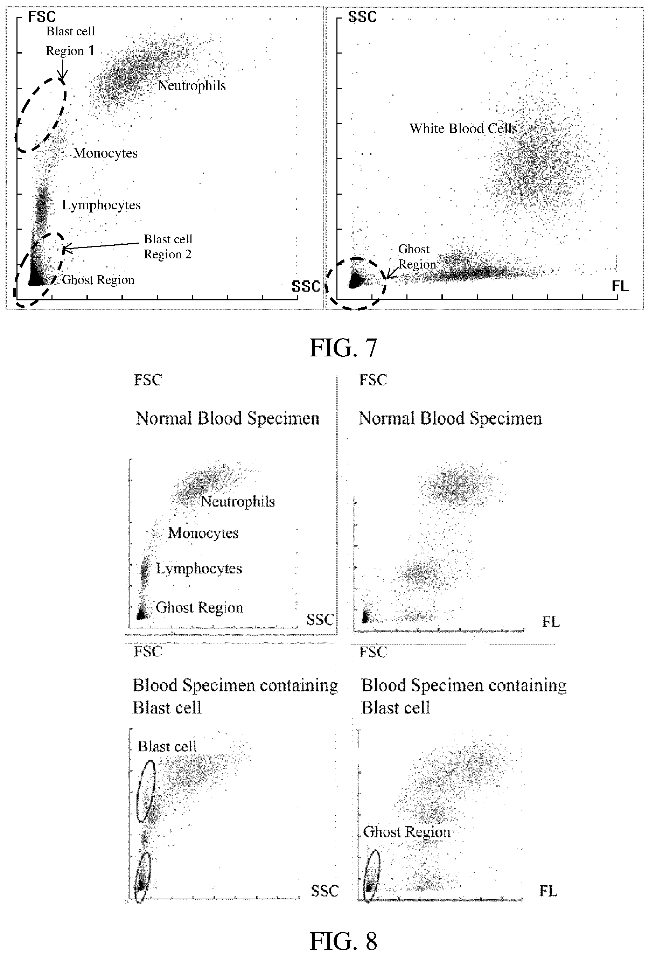

20 µL of anticoagulant-treated blood specimen from a normal subject and 20 µL of reagent A were added to 1mL of reagent B, and incubated at 42°C for 30 seconds to form a sample for determination by Mindray 7500CS hematology analyzer to obtain the forward low-angle scattered light intensity, side high-angle scattered light intensity and fluorescence light intensity, and scatter plots were obtained respectively, as shown in FIG. 7.

The left graph of FIG. 7 is a two-dimensional scatter plot of a side scattered light intensity (SSC) versus a forward scattered light intensity (FSC). Because the blood specimen comes from a normal subject, only the blast cell region 1 and the blast cell region 2 are shown in dashed coils, in which there is no signal of the blast cells. In the blast cell region II, part of the ghost region overlaps with this region. The right graph of FIG. 7 is a two-dimensional scatter plot of a fluorescence light intensity (FL) versus a side scattered light intensity (SSC). Only the ghost region is shown in dashed coils in the graph. This graph shows that the ghost region is far away from the white blood cells region, and complete ghost information can be obtained. By subtracting the ghost information from the information of the blast cell region 1 and the blast cell region 2, the result that the specimen does not contain blast cells is obtained.

As shown in this embodiment, the method can accurately detect the absence of blast cells in the specimen and avoid false positives.

### EXAMPLE 2

According to the following formulation, staining agent and hemolytic agent are prepared.
A: Staining agent

| | |
|---|---|
| Dye B | 50 mg |
| Ethylene glycol | 990ml |
| Dimethyl sulfoxide | 10ml. |

B: Hemolytic agent

| | |
|---|---|
| Potassium hydrogen phthalate | 1.2 g |
| HEPES | 0.5 g |
| Proclin300 | 0.3 g |
| Sodium hydroxide | 0.25 g |
| EDTA | 0.2 g |
| Sodium lauryl sarcosine | 0.6 g |
| Tween 80 | 0.5 g |
| Water | balanced to 1L |

NaOH or HCl was adopted to adjust the pH value of the reagent to 7.4.

20 µL of anticoagulant-treated blood specimen from a healthy subject or a patient and 20 µL of reagent A were added to 1mL of reagent B, and incubated at 42°C for 30 seconds to form a sample for determination by Mindray 7500CS hematology analyzer, to obtain the forward low-angle scattered light intensity, side high-angle scattered light intensity and fluorescence light intensity, and scatter plots were obtained respectively, as shown in FIG. 8.

In FIG. 8, the two graphs above show the detection results of specimens from the healthy subject. The two graphs below show the detection results of specimens from the patient. The two graphs on the left are two-dimensional scatter graphs of forward scattered light intensity versus side scattered light intensity, in which the blast cell region 1 and the blast cell region 2 are shown by circles. The two graphs on the right are two-dimensional scatter plots of forward scattered light intensity versus fluorescence light intensity, and the circle shows the ghost region. This right graphs show that the ghost region is far away from the white blood cells region, and complete ghost information can be obtained.

The ghost region information obtained from the right graph of FIG. 8 was subtracted from the first characteristic region information including the blast cell region 1 and the blast cell region 2 obtained from the left graph of FIG. 8. The detection did not alarm specimens from the healthy subject, but alarmed the presence of blast cells from specimens from the patient.

### EXAMPLE 3

According to the following formulation, staining agent and hemolytic agent are prepared.
A: Staining agent

| | |
|---|---|
| Dye A | 25 mg |
| Ethylene glycol | 990ml |
| Dimethyl sulfoxide | 10ml. |

B: Hemolytic agent

| | |
|---|---|
| Potassium hydrogen phthalate | 1.2 g |
| HEPES | 0.5 g |
| Proclin300 | 0.3 g |
| Sodium hydroxide | 0.25 g |
| EDTA | 0.2 g |
| Sodium lauryl sarcosine | 0.6 g |
| Tween 20 | 1.5 g |
| Water | balanced to 1 L |

NaOH or HCl was adopted to adjust the pH value of the reagent to 7.4.

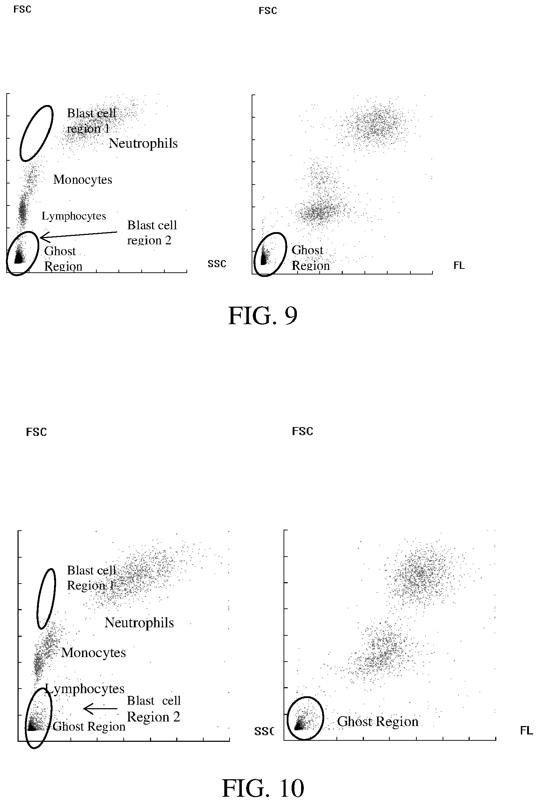

20 µL of anticoagulant-treated blood specimen from a patient and 20 µL of reagent A were added to 1mL of reagent B, and incubated at 42°C for 30 seconds to form a sample for determination by Mindray 7500CS hematology analyzer, to obtain the forward low-angle scattered light intensity, side high-angle scattered light intensity and fluorescence light intensity, and scatter plots were obtained respectively, as shown in FIG. 9.

The left graph of FIG. 9 is a two-dimensional scatter plot of forward scattered light intensity versus side scattered light intensity, in which the blast cell region 1 and the blast cell region 2 are shown in circles. The right graph of FIG. 9 is a two-dimensional scatter plot of forward scattered light intensity versus fluorescence light intensity. The ghost region is shown in circles in the graph. This graph shows that the ghost region is far away from the white blood cells region, and complete ghost information can be obtained.

The ghost region information obtained from the right graph of FIG. 9 was subtracted from the first characteristic region information including the blast cell region 1 and the blast cell region 2 obtained from the left graph of FIG. 9. As can be seen from the left graph, almost no particles appear in the blast cell region 1, but the detection results show that there are blast cells in the specimen, so the specimen was alarmed. In the two-dimensional scatter plot of forward scattered light intensity versus side scattered light intensity obtained by the sample detection, the blast cells mainly appear in the blast cell region 2.

### EXAMPLE 4

According to the following formulation, the staining agent, hemolytic agent and the antibody treatment agent are prepared.
A: Staining agent

| | |
|---|---|
| Dye A | 50 mg |
| Ethylene glycol | 990ml |
| Dimethyl sulfoxide | 10ml |

B: Hemolytic agent

| | |
|---|---|
| Potassium hydrogen phthalate | 1.2 g |
| HEPES | 0.5 g |
| Proclin300 | 0.3 g |
| Sodium hydroxide | 0.25 g |
| EDTA | 0.2 g |
| Sodium lauryl sarcosine | 0.6 g |
| Span 60 | 1.5 g |
| Water | balanced to 1L |

NaOH or HCl was adopted to adjust the pH value of the reagent to 7.4.

20 µL of anticoagulant-treated blood specimen from a patient and 20 µ L of reagent A were added to 1mL of reagent B, and incubated at 42 °C for 30 seconds to form a sample for determination by Mindray 7500CS hematology analyzer to obtain the forward low-angle scattered light intensity, side high-angle scattered light intensity and fluorescence light intensity, and scatter plots were obtained respectively, as shown in FIG. 10.

The left graph of FIG. 10 is a two-dimensional scatter plot of forward scattered light intensity versus side scattered light intensity, in which the blast cell region 1 and the blast cell region 2 are shown in circles. The right graph of FIG. 10 is a two-dimensional scatter plot of forward scattered light intensity versus fluorescence light intensity, in which the ghost region is shown in the circle. This graph shows that the ghost region is far away from the white blood cells region, and complete ghost information can be obtained.

The ghost region information obtained from the right graph of FIG. 10 was subtracted from the first characteristic region information including the blast cell region 1 and the blast cell region 2 obtained from the left graph of FIG. 10, and the result was that the specimen was alarmed.

### EXAMPLE 5

According to the following formulation, the staining agent, hemolytic agent and the antibody treatment agent are prepared.
A: Staining agent

| | |
|---|---|
| Dye B | 50 mg |
| Ethylene glycol | 990ml |
| Dimethyl sulfoxide | 10ml. |

B: Hemolytic agent

| | |
|---|---|
| Potassium hydrogen phthalate | 1.2 g |
| HEPES | 0.5 g |
| Proclin300 | 0.3 g |
| Sodium hydroxide | 0.25 g |
| EDTA | 0.2 g |
| Sodium lauryl sarcosine | 0.6 g |
| Span 80 | 1.5 g |
| Water | balanced to 1L |

NaOH or HCl was adopted to adjust the pH value of the reagent to 7.4.

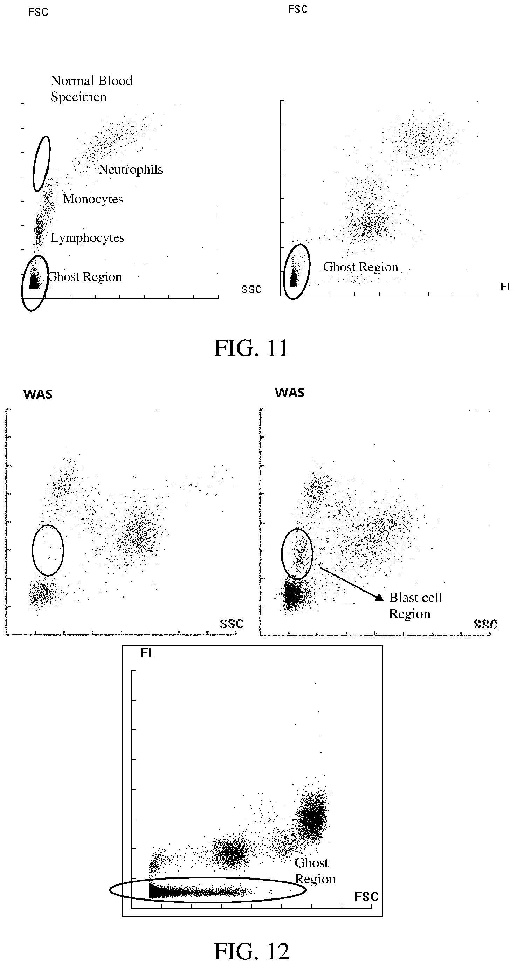

20 µL of anticoagulant-treated blood specimen from a healthy subject and 20 µL of reagent A were added to 1mL of reagent B, and incubated at 42°C for 30 seconds to form a sample for determination by Mindray 7500CS hematology analyzer to obtain the forward low-angle scattered light intensity, side high-angle scattered light intensity and fluorescence light intensity, and scatter plots were obtained respectively, as shown in FIG. 11.

The left graph of FIG. 11 is a two-dimensional scatter plot of forward scattered light intensity versus side scattered light intensity, in which the blast cell region 1 and the blast cell region 2 are shown in circles. The right graph is a two-dimensional scatter plot of forward scattered light intensity versus fluorescence light intensity. The ghost region is shown in circles in the graph. This graph shows that the ghost region is far away from the white blood cells region, and complete ghost information can be obtained. The ghost region information obtained from the right graph of FIG. 11 was subtracted from the first characteristic region information including the blast cell region 1 and the blast cell region 2 obtained from the left graph of FIG. 11, and the result was that the specimen was not alarmed.

### EXAMPLE 6

According to the following formulation, the staining agent, hemolytic agent and the antibody treatment agent are prepared.
A: Staining agent

| | |
|---|---|
| Dye C | 50 mg |
| Ethylene glycol | 990ml |
| Dimethyl sulfoxide | 10ml. |

B: Hemolytic agent

| | |
|---|---|
| Potassium hydrogen phthalate | 1.2 g |
| HEPES | 0.5 g |
| Proclin300 | 0.3 g |
| Sodium hydroxide | 0.25 g |
| EDTA | 0.2 g |
| Sodium lauryl sarcosine | 0.6 g |
| Tween 80 | 1.0g |
| Water | balanced to 1L |

NaOH or HCl was adopted to adjust the pH value of the reagent to 7.4.
C: Antibody treatment agent (commercial products diluted with phosphate buffer)

| | |
|---|---|
| FITC labeled CD45 antibody | 200 µg/ml. |

100 µL of anticoagulant-treated blood specimens from a patient was added to 1 µL of reagent C , incubated at 42 °C for 1 to 2 minutes, 20 µL of the incubation mixture were added to 1 mL of reagent B, and 20 µL of reagent A was added and incubated at 42°C for 30 seconds to form a sample. The forward low-angle scattered light intensity, the side high-angle scattered light intensity and two types of fluorescence light intensity (from fluorescent dye C and FITC labeled CD45 respectively) were measured by hematology analyzer with blue light as the excitation light source, and the scatter plots were obtained respectively.

At the same time, the same reagent A to C was used to measure normal blood specimens of a healthy subject and obtain scatter plots.

The upper left graph of FIG. 12 shows the scatter diagram of antibody fluorescence light intensity (WAS) versus side scattered light intensity (SSC) from the healthy subject, and the upper right graph shows the scatter diagram of antibody fluorescence light intensity (WAS) versus side scattered light intensity (SSC) from the patient. It is apparent from the above two graphs that there are particles in the circled areas. In the scatter plot of blood sample from the patient, there are a large number of particles in the same region, indicating the existence of blast cells in the blood. In the scatter plot of blood sample from the healthy subject, there are also particles in the circled area, which is a small amount of background interference. After deducting background and eliminating interference, there is no particle information in the blast cell region, suggesting that there is no blast cell in the sample. The lower graph of FIG. 12 is a scatter plot of fluorescence light intensity (FL) versus forward scattered light intensity (FSC) from the patient (not shown that from the healthy subject). It can be seen that the ghost is far away from other cell regions, so all the ghost information can be obtained.

The blast cells count from the patient specimen obtained by subtracting the ghost region information was 22.4%. At the same time, the specimen was examined under microscope, and the blast cells count was 24.4%.

### EXAMPLE 7

According to the following formulation, the staining agent, hemolytic agent and the antibody treatment agent are prepared.
A: Staining agent

| | |
|---|---|
| Dye C | 50 mg |
| Ethylene glycol | 990ml |
| Dimethyl sulfoxide | 10ml |

B: Hemolytic agent

| | |
|---|---|
| Potassium hydrogen phthalate | 1.2 g |
| HEPES | 0.5 g |
| Proclin300 | 0.3 g |
| Sodium hydroxide | 0.25 g |
| EDTA | 0.2 g |
| Sodium lauryl sarcosine | 0.6 g |
| Span 60 | 1.0g |
| Water | balanced to 1L |

NaOH or HCl was adopted to adjust the pH value of the reagent to 7.4.
C: Antibody treatment agent (commercial products diluted with phosphate buffer)

| | |
|---|---|
| FITC labeled CD45 antibody | 100 µg/ml. |

Blood specimens from a patient and a healthy subject were tested according to the following methods. 100 µL of anticoagulant-treated blood specimens was added to 1 µL of reagent C, incubated at 42°C for 1 to 2 minutes, then 20 µL of the incubation mixture were added to 1 mL of reagent B, and 20 µL of reagent A was added and incubated at 42°C for 30 seconds to form a sample. The forward low-angle scattered light intensity, the side high-angle scattered light intensity and two types of fluorescence light intensity (from fluorescent dye 2 and FITC labeled CD45 respectively) were obtained by a blood cell analyzer with blue light as the excitation light source, and the scatter plots were obtained respectively.

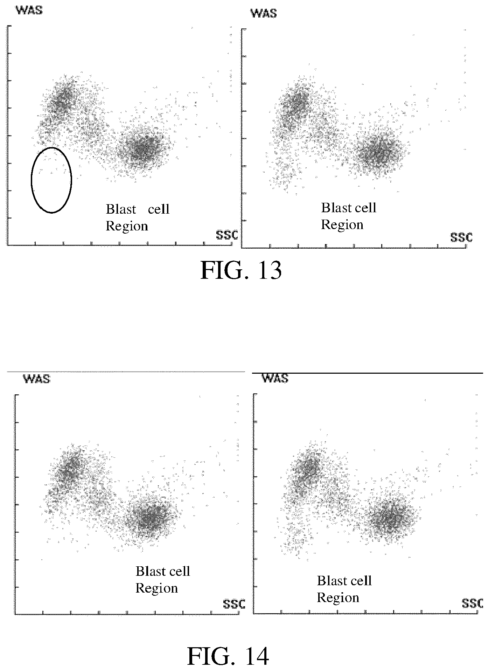

According to the same method as in Example 6, the first characteristic region information was obtained from the scatter plot of antibody fluorescence light intensity versus side scattered light intensity, the ghost region information was obtained from the scatter plot of forward scattered light intensity versus fluorescence light intensity, and the ghost region information was subtracted from the first characteristic region information of the scatter plot of antibody fluorescence light intensity (WAS) versus side scattered light intensity (SSC), respectively. The results are shown in FIG. 13.

The right graph of FIG. 13 shows the detection result of the healthy subject and the left graph shows the detection result of the patient. The blast cells count of the patient specimen was 9.3%. At the same time, the specimen was examined under microscope, and the blast cells count was 10.6%.

### EXAMPLE 8

According to the following formulation, the staining agent, hemolytic agent and the antibody treatment agent are prepared.
A: Staining agent

| | |
|---|---|
| Dye C | 50 mg |
| Ethylene glycol | 990ml |
| Dimethyl sulfoxide | 10ml |

B: Hemolytic agent

| | |
|---|---|
| Potassium hydrogen phthalate | 1.2 g |
| HEPES | 0.5 g |
| Proclin300 | 0.3 g |
| Sodium hydroxide | 0.25 g |
| EDTA | 0.2 g |
| Sodium lauryl sarcosine | 0.6 g |
| Tween 80 | 1.0g |
| Water | balanced to 1L |

NaOH or HCl was adopted to adjust the pH value of the reagent to 7.4.
C: Antibody treatment agent (commercial products diluted with phosphate buffer)

| | |
|---|---|
| FITC labeled CD45 antibody | 100 µg/ml. |

100 µL of anticoagulant-treated blood specimens from a patient was incubated with 1 µL of reagent C at 42°C for 1 to 2 minutes, then 20 µL of the incubation mixture were added to 1 mL of reagent B, and 20 µL of reagent A was added and incubated at 42°C for 30 seconds to form a sample. The forward low-angle scattered light intensity, the side high-angle scattered light intensity and two types of fluorescence light intensity (from fluorescent dye C and FITC labeled CD45 respectively) were obtained by a blood cell analyzer with blue light as the excitation light source, and the scatter plots were obtained respectively, as shown in FIG. 14.

According to the same method as in Example 6, the first characteristic region information was obtained from the scatter plot of antibody fluorescence light intensity (WAS) versus side scattered light intensity (SSC), the ghost region information was obtained from the scatter plot of forward scattered light intensity (FSC) versus fluorescence light intensity (FL), and the ghost region information was subtracted from the first characteristic region information of the scatter plot of antibody fluorescence light intensity (WAS) versus side scattered light intensity (SSC), respectively. The results are shown in FIG. 14.

The right graph of FIG. 14 shows the detection result of the healthy subject and the left graph shows the detection result of the patient. The blast cells count was 9.8%. At the same time, the specimen was examined under microscope, and the blast cells count was 10.6%.

### EXAMPLE 9

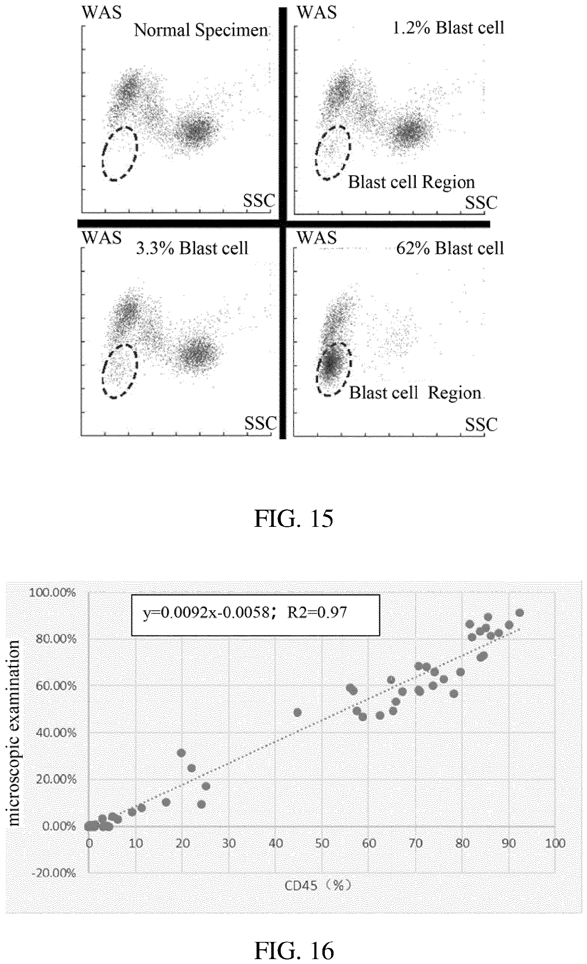

Specimens with different blast cell contents were quantitatively analyzed using the reagent prepared in Example 8 with the same method as in Example 8. The ghost region information of each sample was subtracted from the first characteristic region information of the scatter plot of antibody fluorescence light intensity (WAS) versus side scattered light intensity (SSC) to obtain the blast cell information. The detection results (WAS-SSC scatter plot after deducting the ghost information) of specimens with blast cells contents of 0% (normal specimen), 1.2%, 3.3% and 62%, respectively, are shown in FIG. 15.

By subtracting the ghost region information from the first characteristic region information, the blast cell count in each specimen was obtained. At the same time, each specimen was examined under microscope, and the blast cells were counted. The blast cell count obtained by hematology analyzer using the above method was plotted with respect to the blast cell count obtained by microscopic examination, and linear fitting was performed, and the result is shown in FIG. 16. As can be seen from FIG. 16, the blast cell count obtained by the method of the present disclosure has a good linear correlation with the microscopic examination method, where y=0. 0092 x-0. 0058; R2 = 0.97.

### EXAMPLE 10

According to the following formulation, the staining agent and the antibody treatment agent are prepared.
A: Staining agent

| | |
|---|---|
| Dye C | 50 mg |
| Ethylene glycol | 990ml |
| Dimethyl sulfoxide | 10ml |

C: Antibody treatment agent (commercial products diluted with phosphate buffer)

| | |
|---|---|
| FITC labeled CD45 antibody | 100 µg/ml. |

B: The hemolytic agent is a hemolytic agent for the flow cytometry matching produced by Mindray Company.

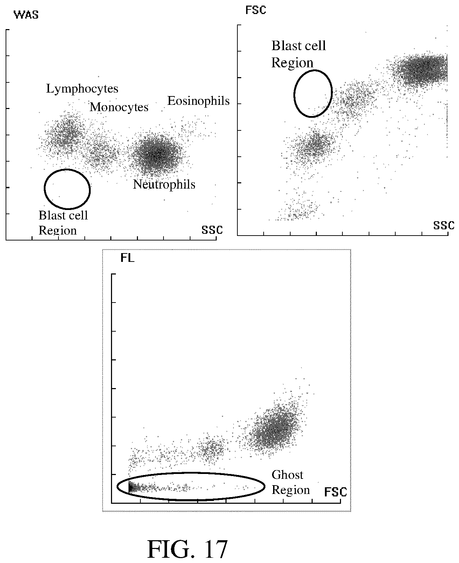

100 µL of anticoagulant-treated blood specimen from a patient was incubated with 1 µL of reagent C, at 42°C for 1 to 2 minutes, 20 µL of the incubation mixture were added to 1 mL of reagent B, and 20 µL of reagent A was added and incubated at 42°C for 30 seconds to form a sample. The forward low-angle scattered light intensity, the side high-angle scattered light intensity and two types of fluorescence light intensity (from fluorescent dye 2 and FITC labeled CD45 respectively) were measured by a blood cell analyzer with blue light as the excitation light source, and the scatter plots were obtained respectively, as shown in FIG. 17.

The upper left graph of FIG. 17 is a two-dimensional scatter plot of antibody fluorescence light intensity (WAS) versus side scattered light intensity (SSC). The blast cell region is shown in circle in the graph. It can be seen that the blast cell region can be well distinguished from other white blood cell regions. The upper right graph of FIG. 17 is a two-dimensional scatter plot of forward scattered light intensity (FSC) versus side scattered light intensity (SSC). The blast cell region is shown in the circle in the graph. It can be seen that when other hemolytic agents are used, the blast cell region is close to the white blood cell region and is not easy to distinguish. The lower graph of FIG. 17 is a two-dimensional scatter plot of fluorescence light intensity (FL) versus side scattered light intensity (SSC). The ghost region is shown in circle in the graph. It can be seen that the ghost region can be distinguished from other cell regions, so all the ghost information can be obtained.

The ghost region information obtained from the lower graph of FIG. 17 was subtracted from the first characteristic region information including the blast cell region obtained from the upper left graph of FIG. 17, and the result showed that there were blast cells in the specimen and the specimen was alarmed.

### EXAMPLE 11: Clinical test example

According to the following formulation, staining agent and hemolytic agent are prepared.
A: Staining agent

| | |
|---|---|
| Dye B | 50 mg |
| Ethylene glycol | 990ml |
| Dimethyl sulfoxide | 10ml. |

B: Hemolytic agent

| | |
|---|---|
| Potassium hydrogen phthalate | 1.2 g |
| HEPES | 0.5 g |
| Proclin300 | 0.3 g |
| Sodium hydroxide | 0.25 g |
| EDTA | 0.2 g |
| Sodium lauryl sarcosine | 0.6 g |
| Tween 80 | 1.5 g |
| Water | balanced to 1L |

NaOH or HCl was adopted to adjust the pH value of the reagent to 7.4.

600 clinical specimens were collected and detected with the above reagents according to the following methods: 20 µL of anticoagulant-treated blood specimen from patients and 20 µL of reagent A were added to 1mL of reagent B, and incubated at 42°C for 30 seconds to form samples for determination. The forward low-angle scattered light intensity, side high-angle scattered light intensity and fluorescence light intensity were obtained by Mindray reinvented blood cell analyzer, to obtain scatter plots.

The first characteristic region information including the information of blast cell region 1 and the blast cell region 2 was obtained in the two-dimensional scatter plot of the forward scattered light intensity versus the side scattered light intensity, and the ghost region information was obtained in the two-dimensional scatter plot of the forward scattered light intensity and the fluorescence light intensity. The ghost region information was subtracted from the first characteristic region information, and when the result showed that the blast cell existed, the measured specimen was alarmed about the blast cells.

The clinical specimens were detected by Mindray 6000 blood cell analyzer using the matched white blood cell detection reagent with traditional blast cell detection methods at the same time. That is, when the white blood cells were detected, the white blood cells were classified and counted by the fluorescence light intensity signal generated by the fluorescent dye combined with the side scattered light intensity signal, and if the abnormal data of the blast cell region was detected, the measured specimen was alarmed about the blast cells.

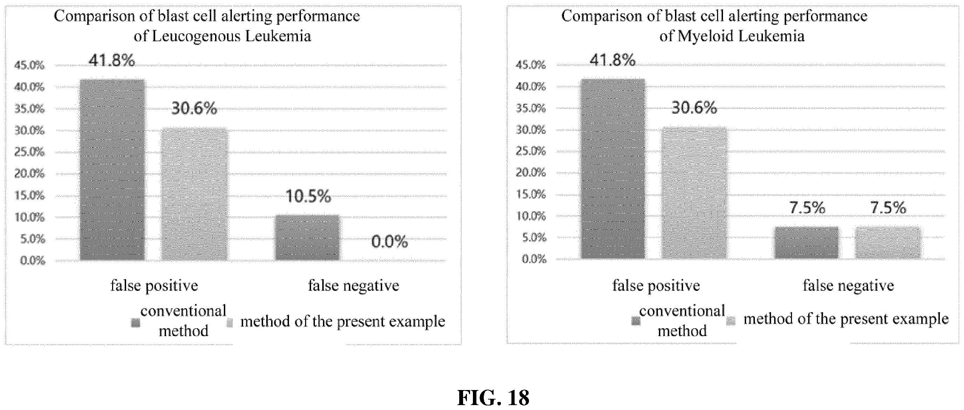

The false positive and false negative alarms of lymphoblastic leukemia patients and myeloid leukocyte patients were counted respectively, as shown in FIG. 18.

Referring to FIG. 18, the statistical results of a large number of specimens show that using the above reagents and the blood cell analyzer for blast cell early alarm can reduce the proportion of false negative and false positive of blast cell early alarm about a certain extent compared with the conventional blast cell early alarm method. Especially for lymphoblastic leukemia, the analysis method of this example can significantly reduce the proportion of false negative, basically realize no missing detection, and has positive clinical significance.

### EXAMPLE 12

According to the following formulation, the staining agent and the hemolytic agent are prepared.
A: Staining agent

| | |
|---|---|
| Dye B | 50 mg |
| Ethylene glycol | 990ml |
| Dimethyl sulfoxide | 10ml |

B: Hemolytic agent

| | |
|---|---|
| Potassium hydrogen phthalate | 1.2 g |
| HEPES | 0.5 g |
| Proclin300 | 0.3 g |
| Sodium hydroxide | 0.25 g |
| EDTA | 0.2 g |
| Sodium lauryl sarcosine | 0.6 g |
| Polyoxyethylene oleyl ether | 1.5 g |
| Water | balanced to 1L. |

NaOH or HCl was adopted to adjust the pH value of the reagent to 7.4.

20 µL of anticoagulant-treated blood specimen from a healthy subject or a patient and 20µL of reagent A (without adding a fluorescence molecule) was added to 1 mL of reagent B respectively, and incubated at 42°C for 30 seconds, to form a sample to be test. The forward low-angle scattered light intensity, the side high-angle scattered light intensity and the fluorescence light intensity were measured by Mindray 7500CS hematology analyzer, and the scatter plots were obtained respectively, as shown in FIG. 19. The upper two graphs in FIG. 19 show the detection results of the specimen from a healthy subject; the lower two graphs show detection results from the specimen from a patient; the left two graphs are two-dimensional scatter plots of the forward scattered light intensity versus the side scattered light intensity, in which the lower left circle shows the two regions where blast cells may appear; the right two graphs are two-dimensional scatter plots of forward scattered light intensity versus fluorescence light intensity, and the lower right circle shows the ghost region. From the right graph, it can be seen that the ghost region is far away from the white blood cell region, and the complete ghost information can be obtained.

The blast cell information was obtained by subtracting the ghost region information obtained from the right graph from the first characteristic region information including the blast cell information obtained from the left graph of FIG. 19. The detection did not alert the specimen from the healthy subject, but the specimen from the patient to the presence of blast cells. The results showed that using other nonionic surfactants as hemolytic agents could be used for early warning of the presence of blast cells in peripheral blood.

### EXAMPLE 13

According to the following formulation, the staining agent and the hemolytic agent are prepared.
A: Staining agent

| | |
|---|---|
| Ethylene glycol | 990ml |
| Dimethyl sulfoxide | 10ml |

B: Hemolytic agent

| | |
|---|---|
| Potassium hydrogen phthalate | 1.2 g |
| HEPES | 0.5 g |
| Proclin300 | 0.3 g |
| Sodium hydroxide | 0.25 g |
| EDTA | 0.2 g |
| Sodium lauryl sarcosine | 0.6 g |
| Tween 80 | 1.5 g |
| Water | balanced to 1L. |

NaOH or HCl was adopted to adjust the pH value of the reagent to 7.4.

20 µL of anticoagulant-treated blood specimen from subjects (including a healthy subject or a patient) and 20µL of reagent A (without adding a fluorescence molecule) was added to 1 mL of reagent B respectively, and incubated at 42°C for 30 seconds, to form a sample to be test. The forward low-angle scattered light intensity and the side high-angle scattered light intensity were measured by Mindray 7500CS hematology analyzer, and the scatter plots were obtained respectively, as shown in FIG. 20. The left graph in FIG. 20 shows the two-dimensional scatter plot of the forward scattered light intensity (FSC) versus the side scattered light intensity (SSC) from the healthy subject; and the right graph shows the two-dimensional scatter plot of forward scattered light intensity (FSC) versus side scattered light intensity (SSC) from the patient. Compared to the specimen form the healthy subject, the scatter plot of the blood specimen from the patient showed particles in circled areas, indicating the presence of blast cells in the blood. The results show that the detection system can indicate the presence of blast cells.

The above are only preferred embodiments of the present invention, and are not therefore limiting the patent scope of the present invention. Any equivalent structural transformation made by using the contents of the present specification and drawings, or direct/indirect application in other related technical fields, under the inventive concept of the present invention, shall be included in the patent protection scope of the present invention.

## Claims

1. A sample analysis method, comprising:
obtaining a specimen to be tested from a subject;
preparing a first sample comprising at least a portion of the specimen to be tested and a first reagent, wherein the first reagent comprises a hemolytic agent containing at least one nonionic surfactant comprising a dehydrated sorbitan fatty acid ester, and a staining agent containing a fluorescent dye;
causing particles in the first sample to pass one-by-one through a detection area of an optical detection device, irradiating the particles in the first sample with a light source of the optical detection device to obtain optical signals of the particles;
obtaining first characteristic region information and ghost region information based on the optical signals, wherein the first characteristic region information includes blast cell information and at least part of the ghost region information; and
obtaining the blast cell information based on the first characteristic region information and the ghost region information.

2. The method of claim 1, wherein the optical signals comprise a side scattered light intensity signal, a forward scattered light intensity signal, and a first fluorescence light intensity signal from the staining agent containing the fluorescent dye;
wherein obtaining the first characteristic region information and the ghost region information based on the optical signals comprises:
obtaining the first characteristic region information based on the side scattered light intensity signal and the forward scattered light intensity signal, and obtaining the ghost region information based on at least the first fluorescence light intensity signal.

3. A sample analysis method, comprising:
obtaining a specimen to be tested from a subject;
comprising at least a portion of the specimen to be tested and a second reagent, wherein the second reagent comprises a hemolytic agent, a staining agent containing a fluorescent dye and an antibody treatment agent containing a fluorescent labeled CD45;
causing particles in the second sample to pass one-by-one through a detection area of an optical detection device, irradiating the particles in the second sample with a light source of the optical detection device to obtain optical signals of the particles, wherein the optical signals comprise a side scattered light intensity signal, a forward scattered light intensity signal, a first fluorescence light intensity signal from the staining agent containing the fluorescent dye, and a second fluorescence light intensity signal from the antibody treatment agent containing the fluorescent labeled CD45;
obtaining first characteristic region information based on the side scattered light intensity signal and the second fluorescence light intensity signal, obtaining ghost region information based on at least the first fluorescence light intensity signal, wherein the first characteristic region information comprises blast cell information and at least part of the ghost region information; and
obtaining the blast cell information based on the first characteristic region information and the ghost region information.

4. The method of claim 3, wherein the fluorescent labeled CD45 in the second reagent has a concentration of 25µg/mL to 1000µg/mL, preferably 50µg/mL to 250µg/mL.

5. The method of claim 3 or 4, wherein the hemolytic agent comprises at least one selected from a group consisting of cationic surfactants, nonionic surfactants, alkyl glycosides, triterpenoid saponins, steroidal saponins, and diethylene glycol; preferably, the cationic surfactants are selected from quaternary ammonium salts; the nonionic surfactants are selected from polyoxyethylenes and dehydrated sorbitan fatty acid esters.

6. A sample analysis method, comprising:
obtaining a specimen to be tested from a subject;
preparing a second sample comprising at least a portion of the specimen to be tested and a second reagent, wherein the second reagent comprises a hemolytic agent, a staining agent containing a fluorescent dye and an antibody treatment agent containing a fluorescent labeled antibody;
causing particles in the second sample to pass one-by-one through a detection area of an optical detection device, irradiating the particles in the second sample with a light source of the optical detection device to obtain optical signals of the particles, wherein the optical signals comprise a side scattered light intensity signal, a forward scattered light intensity signal, a first fluorescence light intensity signal from the staining agent containing the fluorescent dye, and a second fluorescence light intensity signal from the antibody treatment agent containing the fluorescent labeled antibody;
side scattered light intensity signal and the second fluorescence light intensity signal, obtaining ghost region information based on at least the first fluorescence light intensity signal, wherein the first characteristic region information comprises blast cell information and at least part of ghost region information; and
obtaining the blast cell information based on the first characteristic region information and the ghost region information.

7. A sample analysis method, comprising:
obtaining a specimen to be tested from a subject;
preparing a third sample comprising at least a portion of the specimen to be tested and a third reagent, wherein the third reagent comprises at least a hemolytic agent capable of treating respective cell membranes of mature leukocytes and blast cells differently, and a staining agent containing a fluorescent dye;
causing particles in the third sample to pass one-by-one through a detection area of an optical detection device, irradiating the particles in the third sample with a light source of the optical detection device to obtain optical signals of the particles, wherein the optical signals comprise a side scattered light intensity signal, a forward scattered light intensity signal, a first fluorescence light intensity signal from the staining agent containing the fluorescent dye;
side scattered light intensity signal and the forward scattered light intensity signal, obtaining ghost region information based on at least the first fluorescence light intensity signal, wherein the first characteristic region information comprises blast cell information and at least part of ghost region information; and
obtaining the blast cell information based on the first characteristic region information and the at least part of ghost region information.

8. The method of any one of claims 2 to 7, wherein obtaining ghost region information based on at least the first fluorescence light intensity signal comprises:
obtaining the ghost region information based on the first fluorescence light intensity signal and any one of the side scattered intensity signal and the forward scattered intensity signal;
or,
wherein obtaining the blast cell information based on the first characteristic region information and the ghost region information comprises:
subtracting the at least part of the ghost region information from the first characteristic region information to obtain the blast cell information.

9. The method of any one of claims 3, 6 or 7, wherein the hemolytic agent comprises at least one nonionic surfactant comprising a dehydrated sorbitan fatty acid ester.

10. The method of any one of claims 1 to 8, wherein the fluorescent dye has a concentration of 1mg/L to 500mg/L, preferably 10mg/L to 50mg/L.

11. A sample analysis method, comprising:
obtaining a specimen to be tested from a subject;
preparing a fourth sample comprising at least a portion of the specimen to be tested and a fourth reagent, wherein the fourth reagent comprises a hemolytic agent containing at least one nonionic surfactant comprising a dehydrated sorbitan fatty acid ester;
causing particles in the fourth sample to pass one-by-one through a detection area of an optical detection device, irradiating the particles in the fourth sample with a light source of the optical detection device to obtain optical signals of the particles, wherein the optical signals comprise a side scattered light intensity signal and a forward scattered light intensity signal;
obtaining first characteristic region information based on the side scattered light intensity signal and the forward scattered light intensity signal, wherein the first characteristic region information comprises blast cell information; and
obtaining the blast cell information based on the first characteristic region information.

12. The method of claim 11, wherein the blast cell information comprises an alarm about blast cells.

13. The method of any one of claims 1, 2, 9, 11, wherein the dehydrated sorbitan fatty acid ester is selected from a group consisting of Tween and Span,
preferably, the dehydrated sorbitan fatty acid ester is selected from a group consisting of Span 40 ~ Span 80 and Tween 20 ~ Tween 100;
or, wherein the at least one nonionic surfactant comprising a dehydrated sorbitan fatty acid ester has a concentration of 0.2g/L to 2g/L, preferably 0.3g/L to 1.5 g/L.

14. The method of any one of claims 1 to 13, wherein the specimen to be tested includes peripheral blood.

15. The method of any one of claims 1 to 10, wherein the blast cell information comprises a count and/or an alarm about blast cells.
